(19)

Europäisches
Patentamt
European
Patent Office
Office européen
des brevets

(11) **EP 4 412 388 A2**

(12) **EUROPEAN PATENT APPLICATION**

(43) Date of publication:
**07.08.2024 Bulletin 2024/32**

(51) International Patent Classification (IPC):
***H04W 76/16*** *(2018.01)*

(21) Application number: **24181082.9**

(52) Cooperative Patent Classification (CPC):
**H04W 76/15; H04W 76/16; H04W 76/27;**
H04W 76/28; H04W 84/042; H04W 88/06

(22) Date of filing: **22.10.2021**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.10.2020 US 202063104186 P**

(62) Document number(s) of the earlier application(s) in
accordance with Art. 76 EPC:
**21799348.4 / 4 252 485**

(71) Applicant: **Telefonaktiebolaget LM Ericsson (publ)
164 83 Stockholm (SE)**

(72) Inventors:
• **Araujo, Lian
171 43 SOLNA (SE)**

• **Terzani, Alessio
120 67 STOCKHOLM (SE)**
• **Da Silva, Icaro Leonardo
170 77 SOLNA (SE)**
• **Schliwa-Bertling, Paul
585 71 LJUNGSBRO (SE)**

(74) Representative: **Ericsson
Patent Development
Torshamnsgatan 21-23
164 80 Stockholm (SE)**

Remarks:
This application was filed on 10.06.2024 as a
divisional application to the application mentioned
under INID code 62.

(54) **GAP COORDINATION ACROSS PLMNS IN MULTI-SIM**

(57)     According to some embodiments, a method is performed by a wireless device operating in both a first network and a second network wherein the wireless device is in an idle/inactive state in the second network. The method comprises: determining a periodic pattern for performing a set of idle/inactive mode procedures in the second network; transmitting a first indication of the determined periodic pattern to the first network; monitoring an occurrence of at least one idle/inactive event in the second network; and transmitting a second indication of the occurrence of the at least one idle/inactive event to the first network.

1100

| 1112 – determine a periodic pattern for performing a set of idle/inactive mode procedures in the second network |
| 1114 – transmit a first indication of the determined periodic pattern to the first network |
| 1116 – monitor an occurrence of at least one idle/inactive event in the second network |
| 1118 – transmit a second indication of the occurrence of the at least one idle/inactive event to the first network |

Fig. 11

EP 4 412 388 A2

**Description**

TECHNICAL FIELD

Embodiments of the present disclosure are directed to wireless communications and, more particularly to coordinating gaps and transmissions across public land mobile networks (PLMNs) for multi-SIM operation.

BACKGROUND

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features, and advantages of the enclosed embodiments will be apparent from the following description.

Some wireless devices may operate with more than one subscriber identify module (SIM). This may be referred to as multi-SIM operation. Operating with multiple SIMs may present several challenges. The network operations described below provide background information for understanding these challenges.

A user equipment (UE) is either in RRC_CONNECTED state or in RRC_INACTIVE state when a radio resource control (RRC) connection has been established. If this is not the case, i.e., no RRC connection is established, the UE is in RRC_IDLE state. The RRC states can further be characterized as follows.

For RRC_IDLE, a UE specific discontinuous reception (DRX) may be configured by upper layers. UE controlled mobility is based on network configuration. The UE monitors short messages transmitted with paging radio network temporary identifier (P-RNTI) over downlink control information (DCI), monitors a paging channel for core network (CN) paging using fifth generation (5G) S-temporary mobile subscriber identity (5G-S-TMSI), performs neighboring cell measurements and cell (re-)selection, acquires system information (SI) and can send SI request (if configured), and performs logging of available measurements together with location and time for logged measurement configured UEs.

For RRC_INACTIVE, a UE specific DRX may be configured by upper layers or by the RRC layer. UE controlled mobility is based on network configuration. The UE stores the UE inactive access stratum (AS) context. A radio access network (RAN)-based notification area is configured by RRC layer. The UE monitors short messages transmitted with P-RNTI over DCI, monitors a paging channel for CN paging using 5G-S-TMSI and RAN paging using full-RNTI, performs neighboring cell measurements and cell (re-)selection, performs RAN-based notification area updates periodically and when moving outside the configured RAN-based notification area; acquires system information and can send SI request (if configured), and performs logging of available measurements together with location and time for logged measurement configured UEs.

For RRC_CONNECTED, the UE stores the AS context. Unicast data is transferred to/from the UE. At lower layers, the UE may be configured with a UE specific DRX. UEs supporting carrier aggregation (CA) may use one or more SCells, aggregated with the SpCell, for increased bandwidth. UEs supporting dual connectivity (DC) use one secondary cell group (SCG), aggregated with the master cell group (MCG), for increased bandwidth. Network controlled mobility is within NR and to/from E-UTRA. The UE monitors short messages transmitted with P-RNTI over DCI if configured, monitors control channels associated with the shared data channel to determine if data is scheduled for it, provides channel quality and feedback information, performs neighboring cell measurements and measurement reporting, acquires system information, and performs immediate minimization of drive test (MDT) measurement together with available location reporting.

FIGURE 1 illustrates an overview of UE RRC state machine and state transitions in NR. A UE has only one RRC state in NR at any one time.

FIGURE 2 illustrates an overview of UE state machine and state transitions in NR as well as the mobility procedures supported between NR/5GC E-UTRA/EPC and E-UTRA/5GC.

The network includes DRX and paging in RRC_IDLE and RRC_INACTIVE. Paging allows the network to reach UEs in RRC_IDLE and in RRC_INACTIVE state through *Paging* messages, and to notify UEs in RRC_IDLE, RRC_INACTIVE and RRC_CONNECTED state of system information change and ETWS/CMAS indications through short messages. Both paging messages and short messages are addressed with P-RNTI on physical downlink control channel (PDCCH), but while the former is sent on paging control channel (PCCH), the latter is sent over PDCCH directly.

While in RRC _IDLE, the UE monitors the paging channels for CN-initiated paging. In RRC _INACTIVE the UE also monitors paging channels for RAN-initiated paging. A UE need not monitor paging channels continuously though. Paging DRX is defined where the UE in RRC_IDLE or RRC _INACTIVE is only required to monitor paging channels during one paging occasion (PO) per DRX cycle (see details in TS 38.304). The paging DRX cycles are configured by the network.

For CN-initiated paging, a default cycle is broadcast in system information, and a UE specific cycle can be configured via non-access stratum (NAS) signalling. For RAN-initiated paging, a UE-specific cycle is configured via RRC signalling.

The UE uses the shortest of the DRX cycles applicable, i.e., a UE in RRC_IDLE uses the shortest of the first two cycles above, while a UE in RRC_INACTIVE uses the shortest of the three.

The POs of a UE for CN-initiated and RAN-initiated paging are based on the same UE ID, resulting in overlapping POs for both. The number of different POs in a DRX cycle is configurable via system information and a network may distribute UEs to those POs based on their IDs.

In general, DRX is characterized by the following parameters. The *on-duration* is the duration that the UE waits for, after waking up, to receive PDCCHs. If the UE successfully decodes a PDCCH, the UE stays awake and starts the inactivity timer.

The *inactivity-timer* is the duration that the UE waits to successfully decode a PDCCH, from the last successful decoding of a PDCCH, failing which it can go back to sleep. The UE shall restart the inactivity timer following a single successful decoding of a PDCCH for a first transmission only (i.e., not for retransmissions).

The *retransmission-timer* is the duration until a retransmission can be expected.

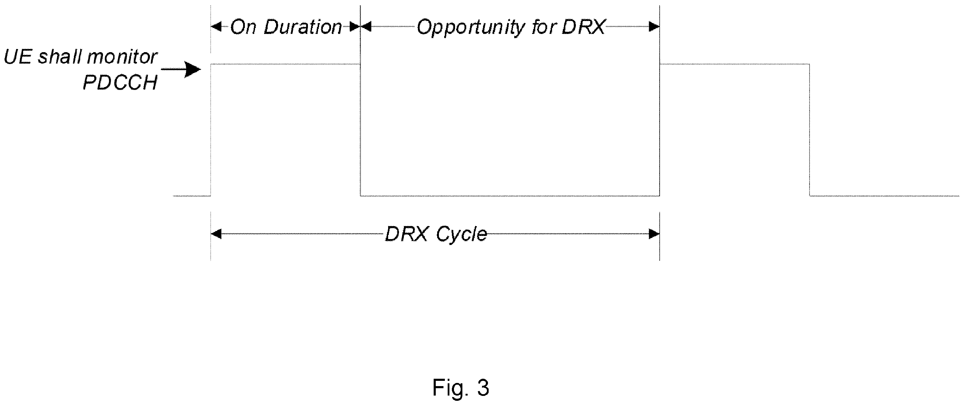

The *cycle* specifies the periodic repetition of the on-duration followed by a possible period of inactivity (see FIGURE 3 below).

The *active-time* is the total duration that the UE monitors PDCCH. This includes the "on-duration" of the DRX cycle, the time UE is performing continuous reception while the inactivity timer has not expired, and the time when the UE is performing continuous reception while waiting for a retransmission opportunity. An example is illustrated in FIGURE 3.

FIGURE 3 is a timing diagram illustrating a DRX cycle. As illustrated, the DRX cycle includes an onDuration followed by an opportunity for DRX. The UE monitors for PDCCH during the onDuration.

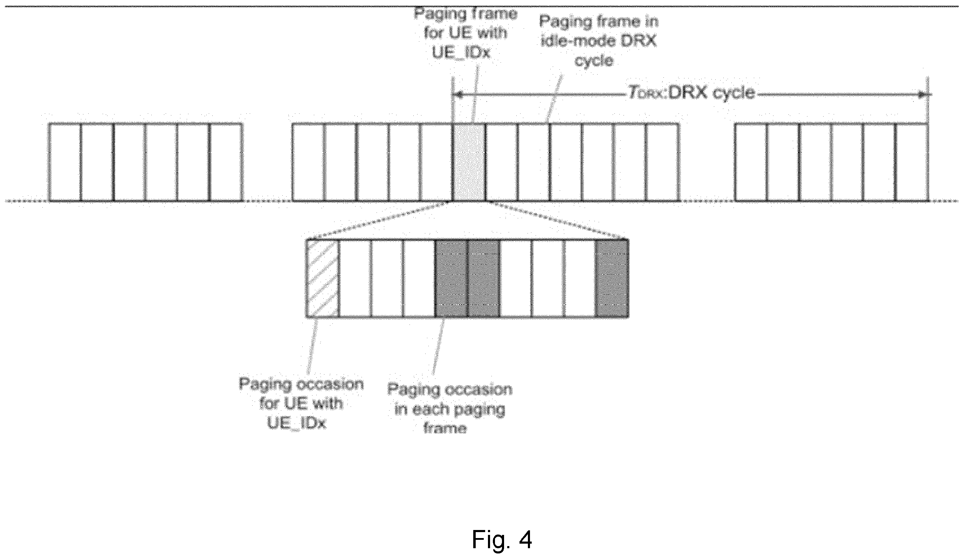

The UE may use DRX in RRC_IDLE and RRC _INACTIVE state to reduce power consumption. The UE monitors one paging occasion (PO) per DRX cycle. A PO is a set of PDCCH monitoring occasions and can consist of multiple time slots (e.g., subframe or OFDM symbol) where paging DCI can be sent. One paging frame (PF) is one radio frame and may contain one or multiple PO(s) or starting point of a PO. In multi-beam operations, the UE assumes that the same paging message and the same short message are repeated in all transmitted beams and thus the selection of the beam(s) for the reception of the paging message and short message is up to UE implementation. The paging message is the same for both RAN initiated paging and CN initiated paging. An example is illustrated in FIGURE 4.

FIGURE 4 is a timing diagram illustrating paging occasions in a radio frame. The PF and PO for paging are determined by the following formulae. The system frame number (SFN) for the PF is determined by (SFN + PF_offset) mod T = (T div N)*(UE_ID mod N). Index (i_s), indicating the index of the PO is determined by i_s = floor (UE_ID/N) mod Ns.

A PO associated with a PF may start in the PF or after the PF. The PDCCH monitoring occasions for a PO can span multiple radio frames. When *SearchSpaceId* other than 0 is configured for *paging-SearchSpace* the PDCCH monitoring occasions for a PO can span multiple periods of the paging search space.

The following parameters are used for the calculation of PF and i_s above:

T: DRX cycle of the UE (T is determined by the shortest of the UE specific DRX value(s), if configured by RRC and/or upper layers, and a default DRX value broadcast in system information. In RRC_IDLE state, if UE specific DRX is not configured by upper layers, the default value is applied).
N: number of total paging frames in T
Ns: number of paging occasions for a PF
PF_offset: offset used for PF determination
UE_ID: 5G-S-TMSI mod 1024

Parameters *Ns, nAndPagingFrameOffset, nrofPDCCH MonitoringOccasionPerSSB-InPO,* and the length of default DRX Cycle are signaled in *SIB1.* The values of N and PF_offset are derived from the parameter *nAndPaging-FrameOffset.* The parameter *first-PDCCH-MonitoringOccasionOfPO* is signaled in *SIB1* for paging in initial downlink (DL) bandwidth part (BWP). For paging in a DL BWP other than the initial DL BWP, the parameter *first-PDCCH-MonitoringOccasionOfPO* is signaled in the corresponding BWP configuration.

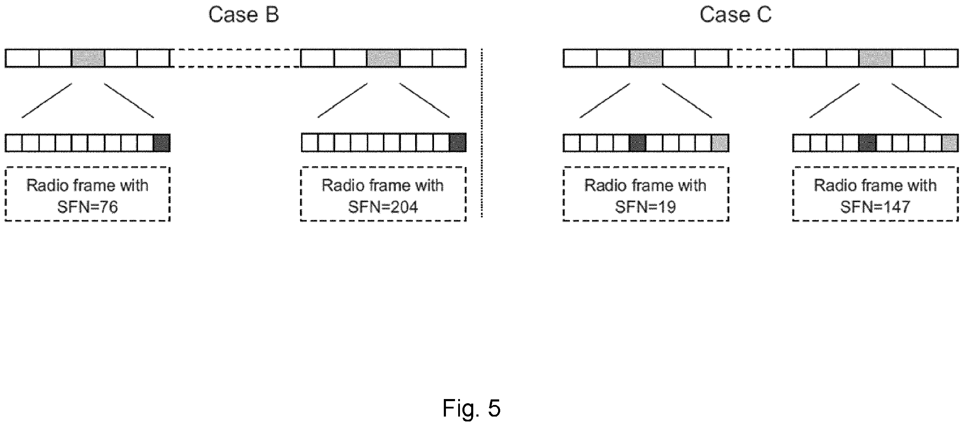

For example, in case B of FIGURE 5, one out of every 4 radio frames is used for paging, using one subframe in each of the radio frames. In case C of FIGURE 5, two subframes in each radio frame are used for paging, i.e. Ns = 2. All the shaded subframes can be used for paging; the darker ones are applicable for the UE with the indicated identity.

UE operation also includes cell reselection measurements and evaluations. A UE shall perform measurements for reselection purposes as specified in TS 38.133 (wherein measurement periods are defined, sampling rate, or in general, requirements for cell reselection measurements).

When camped on a cell, the UE shall regularly search for a better cell according to the cell reselection criteria. If a better cell is found, that cell is selected. The change of cell may imply a change of radio access technology (RAT). For cell selection in multi-beam operations, measurement quantity of a cell is up to UE implementation.

A UE uses the following rules to limit needed measurements. If the serving cell fulfils $Srxlev > S_{IntraSearchP}$ and $Squal > S_{IntraSearchQ}$, the UE may choose not to perform intra-frequency measurements. Otherwise, the UE shall perform intra-frequency measurements.

The UE shall apply the following rules for NR inter-frequencies and inter-RAT frequencies, which are indicated in system information and for which the UE has priority provided. For a NR inter-frequency or inter-RAT frequency with a reselection priority higher than the reselection priority of the current NR frequency, the UE shall perform measurements of higher priority NR inter-frequency or inter-RAT frequencies. For a NR inter-frequency with an equal or lower reselection priority than the reselection priority of the current NR frequency and for inter-RAT frequency with lower reselection priority than the reselection priority of the current NR frequency, if the serving cell fulfils $Srxlev > S_{nonIntraSearchP}$ and $Squal > S_{nonIntraSearchQ}$, the UE may choose not to perform measurements of NR inter-frequencies or inter-RAT frequency cells of equal or lower priority. Otherwise, the UE shall perform measurements of NR inter-frequencies or inter-RAT frequency cells of equal or lower priority. If the UE supports relaxed measurement and *relaxedMeasurement* is present in *SIB2,* the UE may further relax the needed measurements.

There are particular requirements for cell reselection measurements. The performance requirements for mobility in RRC_IDLE state aim to ensure that a UE camps on a cell which guarantees good paging reception, that substantial UE battery power saving is achieved and that the interruption in paging reception during cell reselection is minimized.

In LTE, for example, all intra-frequency, inter-frequency and inter-RAT cell reselection requirements have the following characteristics. Requirements are specified for a selected set of typical DRX cycles: 0.32 s, 0.64 s, 1.28 s and 2.56 s. Cell reselection involves detection of new neighbor cells (both E-UTRA and inter-RAT), and measurement of those cells and of previously detected neighbor cells. Measurement and evaluation of cells are carried out at specific rates, which depend upon the DRX cycle in use. Cell reselection decisions are autonomously taken by the UE but are governed by predefined standardized rules, network control parameters and performance requirements. No performance requirements are specified for E-UTRA or inter-RAT cell identification, reference signal received power (RSRP)/reference signal received quality (RSRQ) or inter-RAT measurements in RRC_IDLE, because in RRC_IDLE the UE is not required to report any event or measurement to the network.

For evaluation of the serving cell, the UE is required to measure both RSRP and RSRQ of the serving cell to evaluate the serving cell selection criterion (the ' S-criterion') at least once every DRX cycle. If the S-criterion for the serving cell is not met over a certain number of consecutive DRX cycles (depending on the DRX cycle length in use), the UE initiates measurements of all the neighbor cells (i.e., over all frequency layers indicated by the serving cell) regardless of the measurement rules. For example, for a 1.28 s DRX cycle, the UE starts measuring all the neighbor cells if the S-criterion for the serving cell is not met for 2 consecutive DRX cycles (i.e., for 2.56 s).

For measurement of intra-frequency cells, unlike the measurement of the serving cell, the neighbor cell measurements may not be performed every DRX cycle. The UE initiates the measurement of intra-frequency neighbor cells when the serving cell's RSRP or RSRQ fall below their respective thresholds. However, the cell ranking for cell reselection is only based on RSRP.

The RSRP of the identified intra-frequency cells is measured once every T_measure,EUTRA_intra (which can be measured in number of DRX cycles) as shown below:

| DRX cycle length (s) | $T_{detect,EUTRAN\_intra}$ (s) (number of DRX cycles) | $T_{measure,EUTRAN\_intra}$ (s) (number of DRX cycles) |
|---|---|---|
| 0.32 | 11.52 (36) | 1.28 (4) |
| 0.64 | 17.92 (28) | 1.28 (2) |
| 1.28 | 32(25) | 1.28 (1) |
| 2.56 | 58.88 (23) | 2.56 (1) |

For measurement of inter-frequency cells, if the serving cell's RSRP and RSRQ are above their respective thresholds the UE searches higher-priority inter-frequency layers at least once every *Thigher_priority_search:*

$$Thigher\_priority\_search = (60 * Nlayers) \text{ seconds } (22.1)$$

where Nlayers is the total number of configured higher-priority inter-frequency and inter-RAT frequency layers. The relevant measurement quantities should be measured at least every Tmeasure, E-UTRAN_Inter as defined below:

| DRX cycle length (s) | $T_{detect,EUTRAN\_Inter}$ (s) (number of DRX cycles) | $T_{measure,EUTRAN\_Inter}$ (s) (number of DRX cycles) |
|---|---|---|
| 0.32 | 11.52 (36) | 1.28 (4) |
| 0.64 | 17.92 (28) | 1.28 (2) |
| 1.28 | 32 (25) | 1.28 (1) |
| 2.56 | 58.88 (23) | 2.56 (1) |

If the serving cell's RSRP and RSRQ become equal to or fall below their respective thresholds, the UE searches and measures all inter-frequency cells regardless of their priority. The relevant measurement quantity of the identified inter-frequency cells is measured every

Kcarrier * Tmeasure, E-UTRA_Inter seconds,

as shown below, where Kcarrier is the number of inter-frequency carriers configured by the serving cell.

For measurement of inter-RAT cells, if the quality of the serving cell is above the threshold 'Snonintrasearch'22 the UE searches higher priority inter-RAT frequency layers at least once every Thigher_priority_search according to the same equation for inter-frequency measurements.

UEs also perform system information (SI) acquisition. In RRC_IDLE and RRC_INACTIVE the UE applies the SI acquisition procedure to acquire the AS, NAS and positioning assistance data information. The UE in RRC_IDLE and RRC _INACTIVE shall ensure having a valid version of (at least) the *MIB, SIB1* through *SIB4, SIB5* (if the UE supports E-UTRA) and *SIB11* (if the UE is configured for idle/inactive measurements).

The UE shall apply the SI acquisition procedure upon cell selection (e.g., upon power on), cell-reselection, return from out of coverage, after reconfiguration with sync completion, after entering the network from another RAT, upon receiving an indication that the system information has changed, upon receiving a PWS notification, upon receiving request (e.g., a positioning request) from upper layers; and whenever the UE does not have a valid version of a stored SIB or posSIB or a valid version of a requested SIB.

During intra-frequency, inter-frequency or inter-RAT cell reselection procedures, the UE monitors the serving cell for paging messages until the UE is able to monitor the paging channels of the target cell. To complete the cell reselection successfully and camp on the new cell the UE has to acquire the relevant system information of the target cell. Therefore, during this period paging interruption might occur as the UE is not required simultaneously to receive paging and acquire the system information of the target cell. The interruption time shall not exceed TSI-NR + 2*Ttarget_cell_SMTC_period ms.

At inter-RAT cell re-selection, the UE shall monitor the downlink of the serving cell for paging reception until the UE is capable to start monitoring downlink channels for paging reception of the target inter-RAT cell. For NR to E-UTRAN cell re-selection the interruption time must not exceed TSI-EUTRA + 55 ms.

TSI-NR is the time required for receiving all the relevant system information data according to the reception procedure and the RRC procedure delay of system information blocks defined in TS 38.331 for an NR cell.

TSI-EUTRA is the time required for receiving all the relevant system information data according to the reception procedure and the RRC procedure delay of system information blocks defined in TS 36.331 for an E-UTRAN cell.

These requirements assume sufficient radio conditions, so that decoding of system information can be made without errors and does not consider cell re-selection failure.

In RRC_IDLE the UE performs mobility based registration area updates, i.e., indicates to the access and mobility management function (AMF) that it has entered a tracking area that is not in its configured list (in NAS).

The AMF assigns a registration area to the UE during the registration procedure. A registration area is defined as a set of tracking areas and each of these tracking areas consists of one or more cells that cover a geographical area. Tracking areas cannot overlap each other.

Within the 5GS, the concept of "registration to multiple tracking areas" applies. A tracking area is identified by a tracking area identifier (TAI) that is broadcast in the cells of the tracking area. The TAI is constructed from a tracking area code (TAC) and a PLMN identifier. For a shared network, one or more TAC and multiple PLMN identifiers are broadcast.

To reduce the tracking area update signaling within the 5GS, the AMF can assign several tracking areas to the UE. These tracking areas include a list of tracking areas that is identified by a TAI list. When generating the TAI list, the AMF shall include only TAIs that are applicable on the access where the TAI list is sent. The AMF shall be able to allocate a TAI list over different NG-RAN access technologies.

The UE considers itself registered to a list of tracking areas and does not need to trigger the registration procedure for mobility and periodic registration update used for mobility (i.e. the 5GS registration type IE set to "mobility registration updating" in the REGISTRATION REQUEST message) as long as the UE stays in one of the tracking areas of the list of tracking areas received from the AMF.

The UE will consider the TAI list as valid until it receives a new TAI list in the next registration procedure for mobility and periodic registration update or generic UE configuration update procedure, or the UE is commanded by the network to delete the TAI list by a reject message or it is deregistered from the 5GS. If the registration request is accepted or the TAI list is reallocated by the AMP, the AMF shall provide at least one entry in the TAI list. If the new and the old TAI list are identical, the AMF does not need to provide the new TAI list to the UE during mobility registration update or periodic registration update.

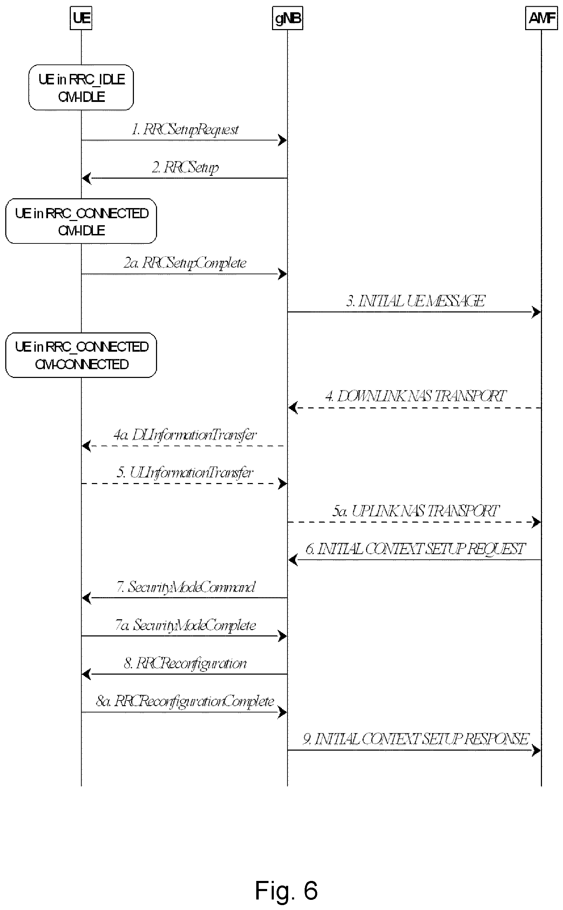

In RRC_IDLE, the UE also performs periodic registration area updates. In both cases, the UE needs to enter RRC_CONNECTED and initiate a NAS procedure for the registration area update. An example is illustrated in FIGURE 6.

FIGURE 6 is a sequence diagram illustrating mobility-based registration area updates performed while the UE is in RRC_INACTIVE. While in RRC_INACTIVE the UE perform RAN area updates. The UE triggered RNA update procedure involving context retrieval over Xn. The procedure may be triggered when the UE moves out of the configured RNA, or periodically.

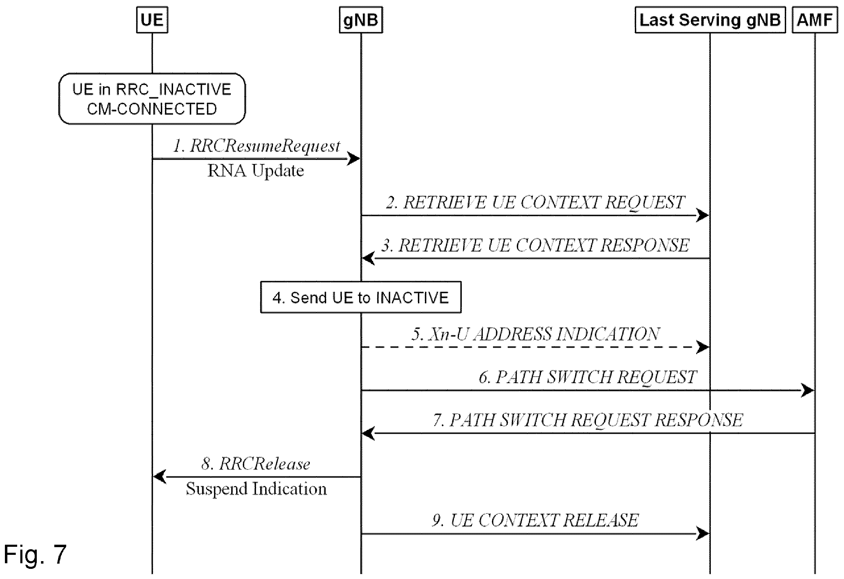

FIGURE 7 is a sequence diagram illustrating RNA update procedure with UE context relocation. At step 1, the UE resumes from RRC_INACTIVE, providing the I-RNTI allocated by the last serving gNB and appropriate cause value, e.g., RAN notification area update.

At step 2, the gNB, if able to resolve the gNB identity contained in the I-RNTI, requests the last serving gNB to provide UE Context, providing the cause value received in step 1.

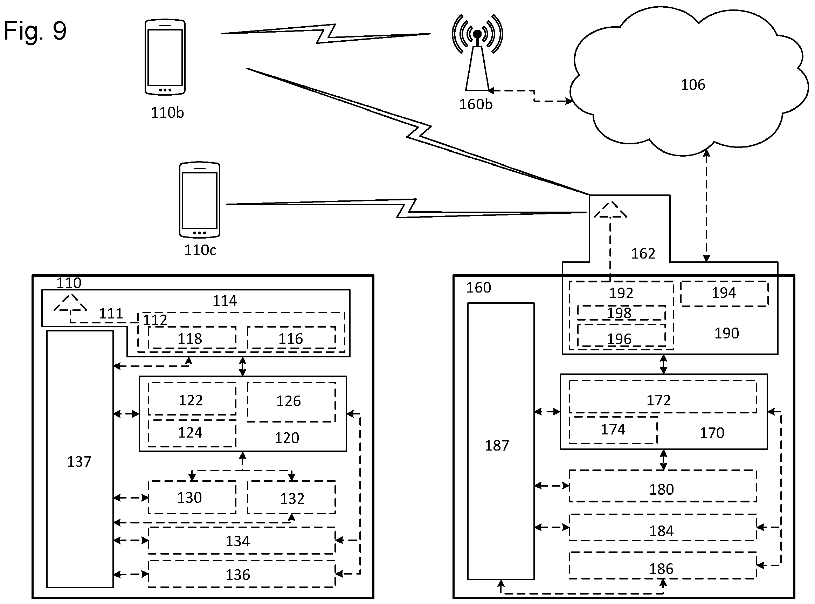

At step 3, the last serving gNB may provide the UE context (as assumed in the following). Alternatively, the last serving gNB may decide to move the UE to RRC_IDLE (and the procedure follows steps 3 and later of figure 9.2.2.5-3) or, if the UE is still within the previously configured RNA, to keep the UE context in the last serving gNB and to keep the UE in RRC_INACTIVE (and the procedure follows steps 3 and later of figure 9.2.2.5-2).

At step 4, the gNB may move the UE to RRC_CONNECTED (and the procedure follows step 4 of Figure 9.2.2.4.1-1), or send the UE back to RRC_IDLE (in which case an *RRCRelease* message is sent by the gNB), or send the UE back to RRC_INACTIVE as assumed in the following.

At step 5, if loss of downlink user data buffered in the last serving gNB shall be prevented, the gNB provides forwarding addresses.

At steps 6 and 7, the gNB performs path switch.

At step 8, the gNB keeps the UE in RRC_INACTIVE state by sending *RRCRelease* with suspend indication. At step 9, the gNB triggers the release of the UE resources at the last serving gNB.

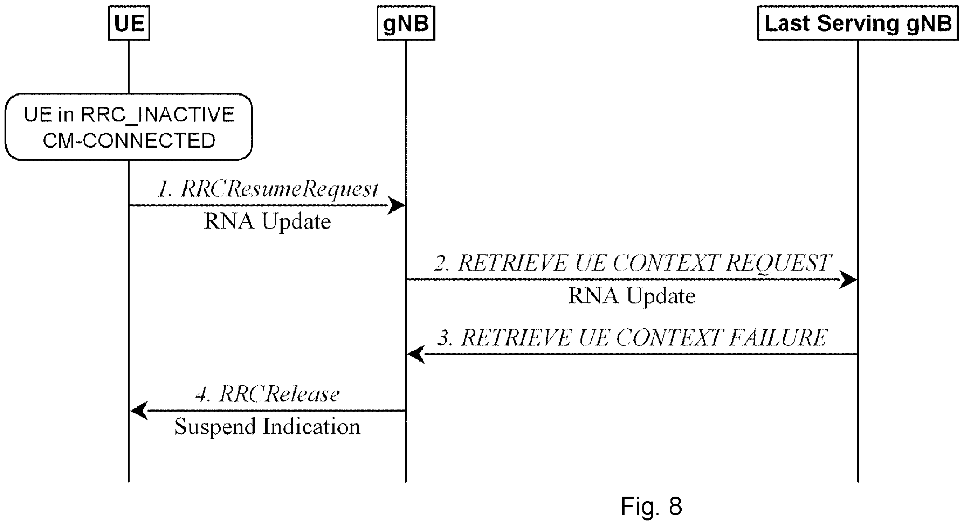

FIGURE 8 is a sequence diagram illustrating periodic RNA update procedure without UE context relocation. The illustrated example describes the RNA update procedure for when the UE is still within the configured RNA and the last serving gNB decides not to relocate the UE context and to keep the UE in RRC_INACTIVE.

At step 1, the UE resumes from RRC INACTIVE, providing the I-RNTI allocated by the last serving gNB and appropriate cause value, e.g., RAN notification area update.

At step 2, the gNB, if able to resolve the gNB identity contained in the I-RNTI, requests the last serving gNB to provide UE context, providing the cause value received in step 1.

At step 3, the last serving gNB stores received information to be used in the next resume attempt (e.g., C-RNTI and physical cell identifier (PCI) related to the resumption cell), and responds to the gNB with the RETRIEVE UE CONTEXT FAILURE message including an encapsulated *RRCRelease* message. The *RRCRelease* message includes Suspend Indication.

At step 4, the gNB forwards the *RRCRelease* message to the UE.

3GPP is currently studying how to best support UE's that can manage two or more simultaneous subscriptions (also referred to as multi-SIM). A single UE is capable of having two or more subscription credentials and basically to "act" as two UE's within one device/hardware entity. Even though mobile terminals with that property exist, most operations are not really optimized as there is no specific standardized support for multi-SIM, e.g., to make it easier for UE's to manage two or more subscriptions simultaneously.

Several aspects may be addressed. For example, a UE may need to be provided support to easier switch between states related to utilization of subscription 1 (USIM1, connecting to a PLMN1) and states related to utilization or communication using subscription 2 (USIM2, connecting to PLMN2) as such states may be dependent, e.g., CM-Connected in PLMN1 and PLMN2. Such switching may be straightforward, or maybe not even necessary, if the UE has the capability of communicating simultaneously towards two networks, using USIM1 and 2 simultaneously. For this to work, there may be a need for at least dual receiver and transmitter chains, that frequencies that are used towards both networks do not cause interference to each other and that radio separation is good enough to not cause, e.g., IM effects in the device. Other aspects that can be addressed by standard is signaling that enables a UE that cannot simultaneously communicate with, e.g., two or more networks, to at least signal a network that it is leaving, or becoming unreachable for that network.

A common scenario is a UE in RRC CONNECTED in Network A that needs to perform operations in Network B, e.g., listen to paging, SIB acquisition, cell reselection. etc. Such scenario may be further divided into short absence (e.g., when the UE listens to paging in network B and switches back to Network A), and long absence (e.g., when the UE initiates a service in network B and thus may not shortly switch back to Network A).

A short UE absence may be handled by negotiation of short interruptions to the connection of the UE to Network A while it performs operations in Network B. During this absence of the UE in Network A, it is usually expected that the UE will be kept in RRC CONNECTED in Network A. Eventually Network A could decide to move the UE to RRC IDLE or RRC INACTIVE as a result of the negotiation.

A short UE absence may be handled by a UE indication that it is leaving for a short time. The UE can use the release preference indication from UE power saving mechanism to indicate leaving (e.g., if it would expect to be moved to IDLE it could send such indication to Network A).

```
ReleasePreference-r16 ::=          SEQUENCE {
    preferredRRC-State-r16           ENUMERATED {idle, inactive, connected,
outOfConnected}
}
```

A long UE absence may be handled by a UE indication that it is leaving for a long period. Network A may still keep the UE context until a certain timer expires.

There currently exist certain challenges. For example, multi-USIM devices have been more and more popular in different countries. The user may have both a personal and a business subscription in one device or has two personal subscriptions in one device for different services (e.g., use one individual subscription and one "family circle" plan). However, support for multi-USIM within a device is currently handled in an implementation-specific manner without any support from 3GPP specifications, resulting in a variety of implementations and UE behaviors most of the time sub-optimal.

UE's that are registered to more than one network/PLMNs need to be able to receive paging message from more than one network. Dependent on UE capabilities (e.g., Rx and Tx capabilities) this can create situations in which a UE is occupied listening to pages from one network while pages from other networks also may be sent. Further, UE's may be actively communicating with one network while another network pages the UE. If a user switches between communications towards different networks, situations may occur when a UE/user can no longer receive data from a network with which it was recently communicating. Such situations can have a negative impact on performance, e.g., if pages are sent and not properly received, or if users are scheduled while not being able to receive communication.

Particular problems exist when a multi-SIM UE with a single Rx processing unit/chain or when all Rx processing units/chains are configured to be used in one of the networks/PLMN can only receive transmissions from one PLMN at a time. If the UE is in RRC_CONNECTED in a first PLMN (e.g., PLMN1 associated to USIM1) and in RRC_IDLE (or RRC_INACTIVE) in PLMN2 (e.g., associated to USIM2), such a UE would thus need to be able to maintain being reachable by any of the two PLMNs (or two USIMs), i.e., need to be able to perform actions in RRC_CONNECTED (e.g., PDCCH monitoring, measurements according to MeasConfig, CSI measurements and reporting, etc.) in PLMN1 while performing IDLE/INACTIVE actions in PLMN2 such as listen for paging in PLMN2, perform cell reselection measurements, associated measurements and evaluations, acquire system information (e.g., upon cell reselection or modification indications), perform registration area updates (e.g., upon entering a new registration area), or RAN area updates (e.g., if in RRC_INACTIVE in PLMN2 and performs cell reselection to an area not in the Configured RAN Area Configuration).

In the situations when a UE is communicating using, e.g., USIM1 towards PLMN1, it is in CM_CONNECTED and RRC_CONNECTED, there is no obvious way how a UE should be able to maintain the operations listed above, in PLMN2, associated to connectivity using subscription on USIM2. 3GPP is currently discussing how a multi-SIM UE, i.e., having SIM cards from a PLMN-A and PLMN-B can be in RRC _CONNECTED in PLMN-A while in RRC_IDLE and/or RRC_INACTIVE in PLMN-B, wherein the UE should be able to perform RRC_IDLE/RRC_INACTIVE procedures in PLMN-B such as paging monitoring, cell reselection, etc.

Some proposals include a UE capable of operating with multiple USIMs (at least two) that performs the following actions. If the UE is in CONNECTED in a first PLMN (associated with the first USIM) and in IDLE/INACTIVE in a second PLMN (associated with the second USIM), the UE determines a periodic pattern for performing a set of IDLE/INACTIVE mode procedures in the second PLMN. The UE transmits a first indication with information on the periodic pattern to the first PLMN. The UE then monitors the occurrence of at least one idle event in the second PLMN and transmits a second indication to the first PLMN upon the occurrence of the event.

Using the proposal, the serving gNodeB the UE is connected to in PLMN-A (e.g., the gNodeB associated to the UE's PCell) is aware of possible gaps the UE requires to perform these IDLE and/or INACTIVE procedures in PLMN-B. Thus, based on the reported information, the serving gNodeB does not schedule the UE during those periods.

However, while performing the IDLE and/or INACTIVE procedures in PLMN-B, according to a certain pattern, the PLMN-A may decide to release (to IDLE) or suspend (to INACTIVE state) the UE. In addition, while in IDLE or INACTIVE, the UE may move away from the coverage of the serving gNodeB in PLMN-A (from a cell A1 from the source gNodeB of PLMN-A to a cell A2 from a target gNodeB of PLMN-A). If that happens, after some time the UE may transition to CONNECTED again with PLMN-A and connects to the target gNodeB (which might be the same or not as the last serving gNodeB the UE was suspended or released), the target gNodeB would not be aware of the gaps the UE requires for performing the actions in PLMN-B so that the target gNodeB may schedule the UE in these periods the UE is not listening to PDCCH, which would lead to scheduling failures and unnecessary network transmissions (because the UE is not listening).

## SUMMARY

As described above, certain challenges currently exist with coordinating gaps and transmissions across public land mobile networks (PLMNs) for multi-SIM operation. Certain aspects of the present disclosure and their embodiments may provide solutions to these or other challenges. particular embodiments include a method performed by a wireless terminal (also referred to aa user equipment (UE)) capable of operating with multiple USIMs (at least two). If the UE is in CONNECTED mode in a first public land mobile network (PLMN) (associated with the first USIM) and in IDLE/INACTIVE mode in a second PLMN (associated with the second USIM), the method comprises determining a periodic pattern for performing a set of IDLE/INACTIVE mode procedures in the second PLMN. The method further comprises transmitting a first indication with information on the periodic pattern to the first PLMN and monitoring the occurrence of at least one idle event in the second PLMN and transmitting a second indication to the first PLMN upon the occurrence of the event.

Particular embodiments include a method performed by a first network node. The method comprises receiving from a CONNECTED UE a first indication with information on the periodic pattern and receiving from the CONNECTED UE a second indication to the first PLMN upon the occurrence of the event, wherein that is transmitted by the CONNECTED UE upon the occurrence of at least one idle event in the second PLMN.

In general, particular embodiments provide gaps when a UE is in CM_CONNECTED/RRC _CONNECTED to allow for the UE to temporarily not transmit or receive data.

According to some embodiments, a method is performed by a wireless device (e.g., multi-SIM wireless device) operating in both a first network and a second network wherein the wireless device is in an idle/inactive state in the second network. The method comprises: determining a periodic pattern for performing a set of idle/inactive mode procedures in the second network; transmitting a first indication of the determined periodic pattern to the first network; monitoring an occurrence of at least one idle/inactive event in the second network; and transmitting a second indication of the occurrence of the at least one idle/inactive event to the first network.

In particular embodiments, the occurrence of the at least one idle/inactive event in the second network comprises a periodic event and the second indication comprises an updated periodic pattern based on the determined periodic pattern and the occurrence of the at least one idle/inactive event.

In particular embodiments, the occurrence of the at least one idle/inactive event in the second network comprises a non-periodic event and the second indication comprises an indication that the wireless device will be unavailable to the first network.

In particular embodiments, the occurrence of the at least one idle/inactive event in the second network comprises a non-periodic event and the second indication comprises a request to the first network for the wireless device to be unavailable to the first network. The second indication may include an indication of an amount of time the wireless device will be unavailable to the first network. The second indication may include an indication of the idle/inactive event that occurred in the second network.

In particular embodiments, the periodic pattern is based on one or more of the following procedures in the second network: paging frames and paging occasions configured for the wireless device, discontinuous reception (DRX) cycle, periods for performing measurements, and periodic registration area updates.

In particular embodiments, the periodic pattern comprises a set of time domain windows. The time domain windows may be relative to a frame structure of the first network.

According to some embodiments, a wireless device comprises processing circuitry operable to perform any of the wireless device methods described above.

Also disclosed is a computer program product comprising a non-transitory computer readable medium storing computer readable program code, the computer readable program code operable, when executed by processing circuitry to perform any of the methods performed by the wireless device described above.

According to some embodiments, a method is performed by a network node in a first network serving a first wireless device, wherein the wireless device is also in an idle/inactive state in a second network. The method comprises: receiving, from the wireless device a first indication of a periodic pattern for performing a set of idle/inactive mode procedures in the second network; and upon an occurrence of at least one idle/inactive event in the second network, receiving a second indication of the occurrence of the at least one idle/inactive event.

In particular embodiments, the occurrence of the at least one idle/inactive event in the second network comprises a periodic event and the second indication comprises an updated periodic pattern based on the determined periodic pattern and the occurrence of the at least one idle/inactive event.

In particular embodiments, the occurrence of the at least one idle/inactive event in the second network comprises a non-periodic event and the second indication comprises an indication that the wireless device will be unavailable to the first network.

In particular embodiments, the occurrence of the at least one idle/inactive event in the second network comprises a non-periodic event and the second indication comprises a request to the first network for the wireless device to be unavailable to the first network. The second indication may include an indication of an amount of time the wireless device will be unavailable to the first network. The second indication may include an indication of the idle/inactive event that occurred in the second network.

In particular embodiments, the periodic pattern is based on one or more of the following procedures in the second network: paging frames and paging occasions configured for the wireless device, discontinuous reception (DRX) cycle, periods for performing measurements, and periodic registration area updates.

In particular embodiments, the periodic pattern comprises a set of time domain windows. The time domain windows may be relative to a frame structure of the first network.

According to some embodiments, a network node comprises processing circuitry operable to perform any of the network node methods described above.

Also disclosed is a computer program product comprising a non-transitory computer readable medium storing computer readable program code, the computer readable program code operable, when executed by processing circuitry to perform any of the methods performed by the network node described above.

Certain embodiments may provide one or more of the following technical advantages. For example, particular embodiments provide a signaling solution for informing and coordinating unavailability gaps in the connectivity with the network to facilitate the UE to perform actions in another network, e.g. listen for paging. An advantage of particular embodiments is that the embodiments work when the UE is in CM_CONNECTED/RRC_CONNECTED mode with no waste of resources because the UE is not listening.

Furthermore, because of the mapping or translation between information in PLMN2 into a gap, like a "gap mapping", the networks within two different PLMNs, where the UE operates in MUSIM, do not have to understand deployment aspects of the other network, such as time alignment, paging occasions, etc. With the "gap mapping", the network where the UE is currently in RRC CONNECTED is provided by the UE with "gaps" which abstract the actual complexity of the UE activities in another network. The mapped gaps describe the gaps in the network that the UE is currently in RRC _CONNECTED state and that can use this information for efficient RRM.

BRIEF DESCRIPTION OF THE DRAWINGS

For a more complete understanding of the disclosed embodiments and their features and advantages, reference is now made to the following description, taken in conjunction with the accompanying drawings, in which:

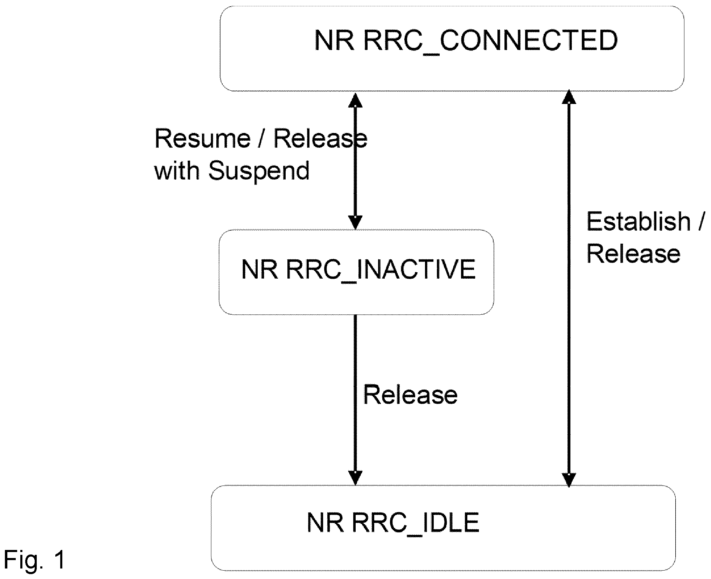

FIGURE 1 illustrates an overview of UE RRC state machine and state transitions in NR,

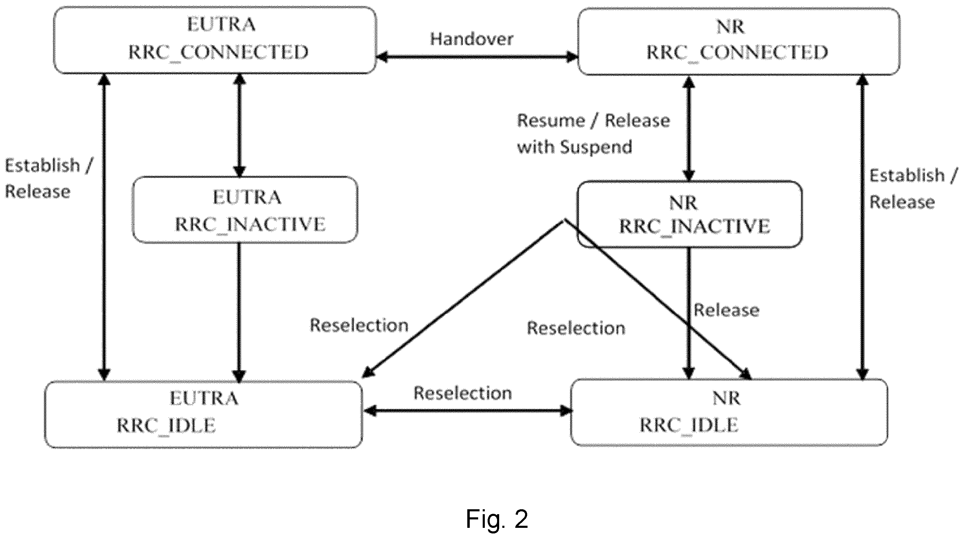

FIGURE 2 illustrates an overview of UE state machine and state transitions in NR as well as the mobility procedures supported between NR/5GC E-UTRA/EPC and E-UTRA/5GC;
FIGURE 3 is a timing diagram illustrating a discontinuous reception (DRX) cycle;
FIGURE 4 is a timing diagram illustrating paging occasions in a radio frame;
FIGURE 5 illustrates paging subframes;
FIGURE 6 is a sequence diagram illustrating mobility-based registration area updates performed while the UE is in RRC_INACTIVE;
FIGURE 7 is a sequence diagram illustrating RNA update procedure with UE context relocation;
FIGURE 8 is a sequence diagram illustrating periodic RNA update procedure without UE context relocation;
FIGURE 9 is a block diagram illustrating an example wireless network;

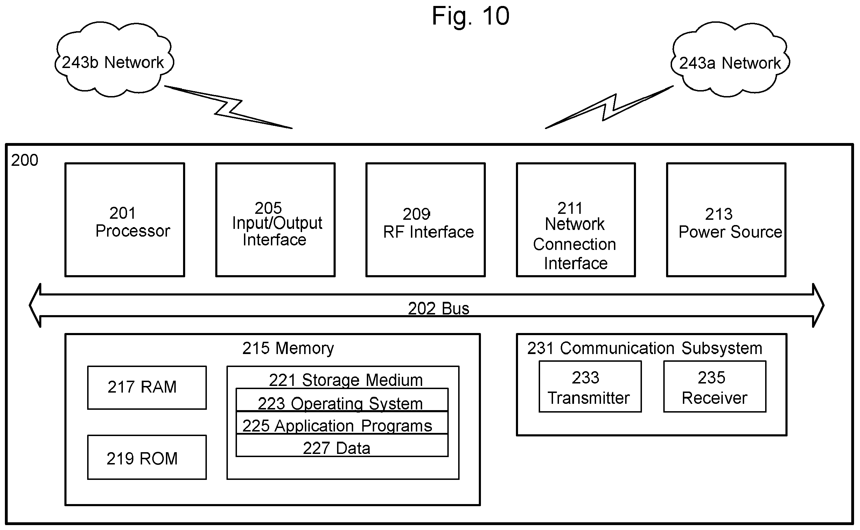

FIGURE 10 illustrates an example user equipment, according to certain embodiments;

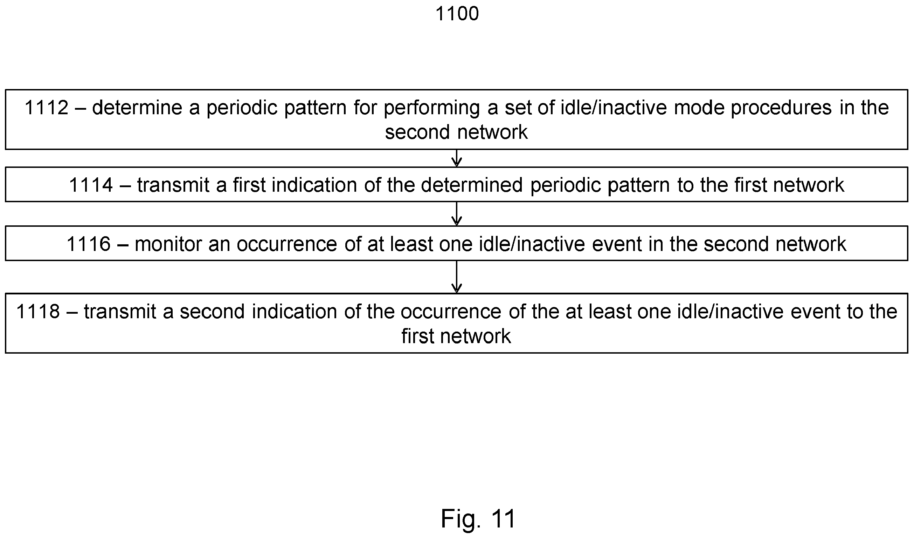

FIGURE 11 is flowchart illustrating an example method in a wireless device, according to certain embodiments;

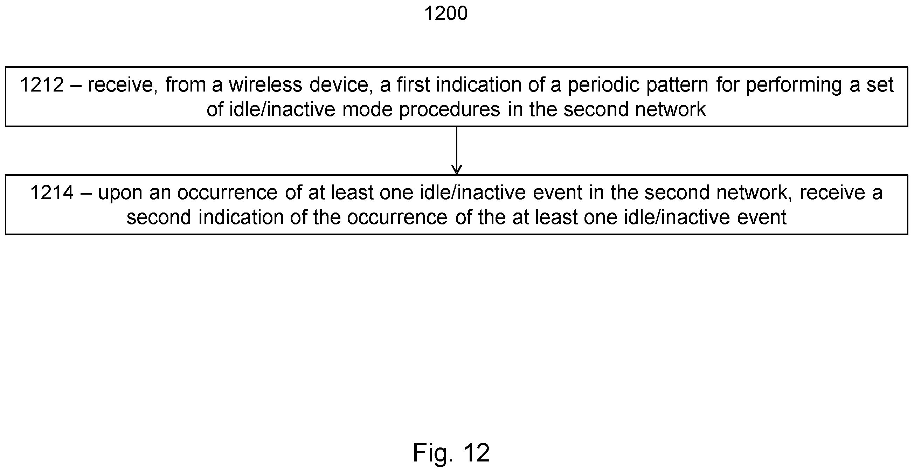

FIGURE 12 is flowchart illustrating an example method in a network node, according to certain embodiments;

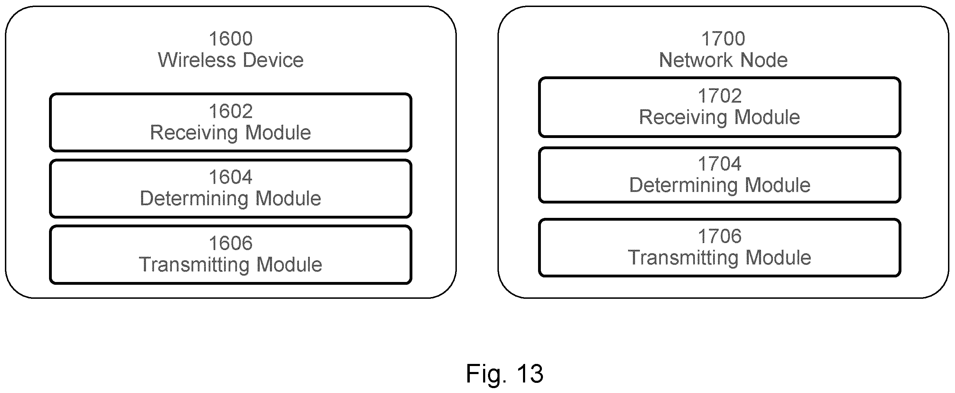

FIGURE 13 illustrates a schematic block diagram of a network node and a wireless device in a wireless network, according to certain embodiments;

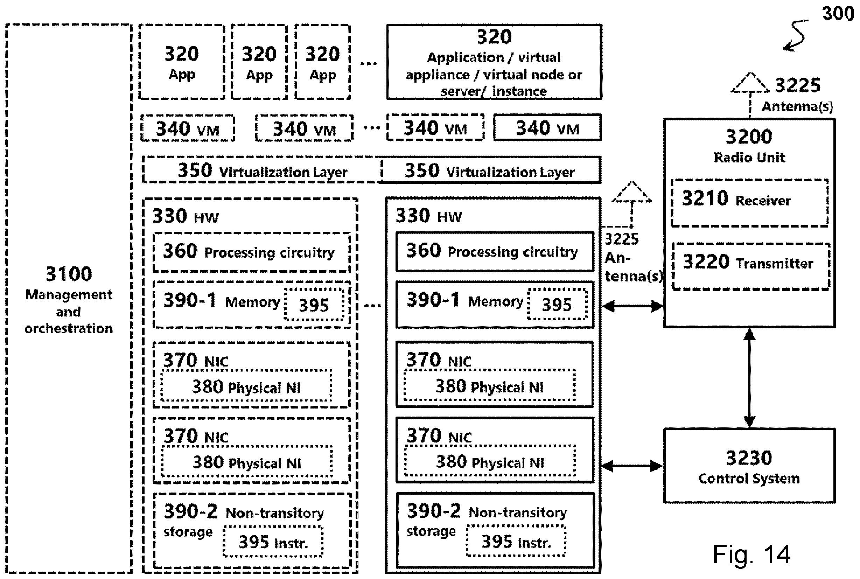

FIGURE 14 illustrates an example virtualization environment, according to certain embodiments;

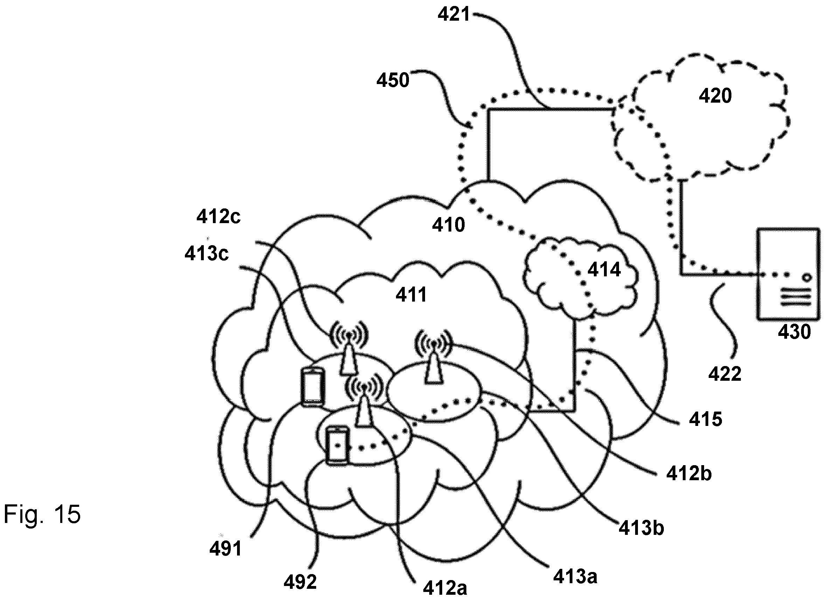

FIGURE 15 illustrates an example telecommunication network connected via an intermediate network to a host computer, according to certain embodiments;

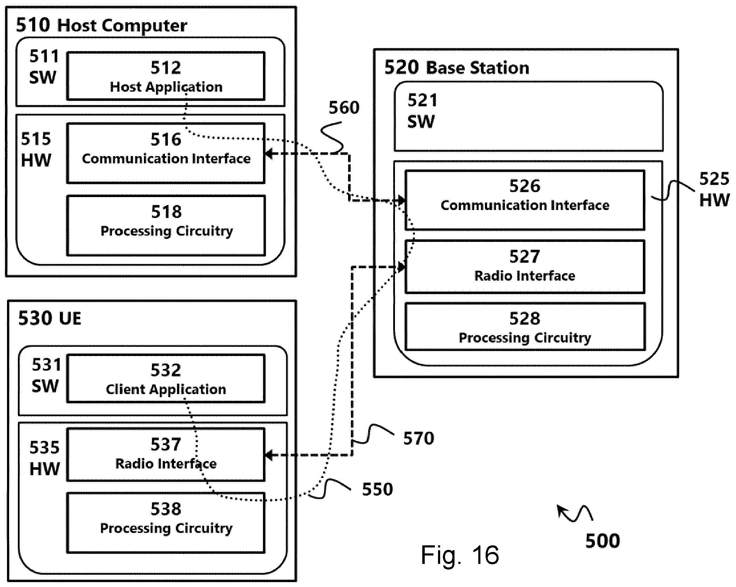

FIGURE 16 illustrates an example host computer communicating via a base station with a user equipment over a partially wireless connection, according to certain embodiments;

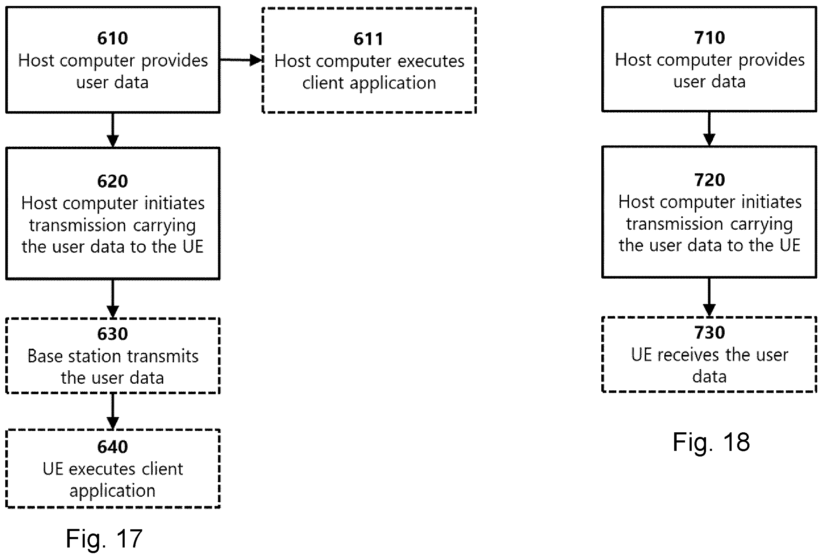

FIGURE 17 is a flowchart illustrating a method implemented, according to certain embodiments;

FIGURE 17 is a flowchart illustrating a method implemented in a communication system, according to certain embodiments;

FIGURE 18 is a flowchart illustrating a method implemented in a communication system, according to certain embodiments; and

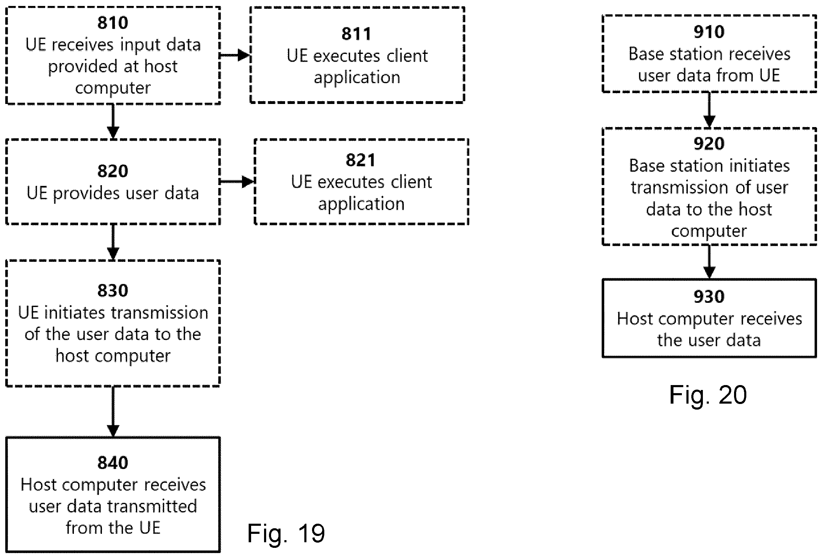

FIGURE 19 is a flowchart illustrating a method implemented in a communication system, according to certain embodiments.

DETAILED DESCRIPTION

As described above, certain challenges currently exist with coordinating gaps and transmissions across public land mobile networks (PLMNs) for multi-SIM operation. Certain aspects of the present disclosure and their embodiments may provide solutions to these or other challenges. particular embodiments provide gaps when a UE is in CM_CONNECTED or RRC _CONNECTED to allow for the UE to temporarily not transmit or receive data.

Particular embodiments are described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

As used herein, the terms PLMN, system, network are used inter-changeably to refer to an entity associated to a USIM at the UE. Also, MU-SIM, MUSIM or MultiSIM are used inter-changeably.

As used herein, the term RRC_CONNECTED is used to indicate the RRC state, and CM CONNECTED (or 5GC_CONNNECTED) to indicate the state from the core network perspective, or simply use the term CONNECTED to refer to any of these terms. However, for the purpose of the embodiments herein, these may be used inter-changeably to refer to a connected UE that is not performing Idle mode procedures (as specified in 38.304 or 36.304).

Particular embodiments address how to create interruptions or "gaps" in the communication for a UE that is communicating in CM_CONNECTED/RRC_CONNECTED mode with PLMN1 using credentials from USIM1. The gaps are then subsequently used by the UE to switch to another system (PLMN2) utilizing other credentials (USIM2) to, e.g., listen for pages.

The network can configure the UE to provide mainly two different indications. One indication is UE assistance information on gaps that can be considered by the network while the UE is in RRC_CONNECTED. Another indication is a UE indication that it will leave (or that it needs to leave, i.e., that it needs to enter RRC_IDLE or RRC _INACTIVE or simply that it cannot monitor downlink control information (DCI) or physical downlink control channel (PDCCH) in the network where it is currently in RRC_CONNECTED to perform operations in another network.

The first indication may be used mostly for periodical/predictable operations that a multi-SIM UE should perform in another network, while the second indication may be used for dynamic, less predictable operations to be performed in another network.

In both cases, the UE absence in the network where it is currently in RRC CONNECTED can be considered short and the network may thus decide to keep the UE in RRC CONNECTED. Moreover, the second indication may also be sent even during the intervals where the UE formerly indicated (through the first indication) to the network that it would not be available, to allow for the case when, e.g., an event based condition was triggered and the UE may have to switch to another network, but possibly for longer time than the one indicated in the "gaps" provided by the first indication (but that may still be short duration activities), e.g., to perform cell reselection.

In response, the network may either decline the request from the UE to have the gaps (e.g., for operation with the PLMN2) or proposed modified version of the gaps. If a modified version of the gaps is received, the UE needs to adjust the operations with PLMN2 accordingly, e.g. ,if shorter periods are provided the UE can monitor fewer paging occasions in PLMN2 than what has been configured.

In particular embodiments, the UE needs to monitor paging in a second PLMN (e.g., PLMN2), for example to allow the second PLMN to reach UEs in RRC_IDLE and in RRC_INACTIVE state through paging messages, and to notify UEs in RRC_IDLE, RRC_INACTIVE and RRC _CONNECTED state of system information change and ETWS/CMAS indications through short messages.

Particular embodiments include a method performed by a wireless terminal (also referred to as a UE) capable of operating with multiple USIMs (at least two). If the UE is in CONNECTED in a first PLMN (associated with the first USIM) and in IDLE/INACTIVE in a second PLMN (associated with the second USIM), the method comprises determining a periodic pattern for performing a set of IDLE/INACTIVE mode procedures in the second PLMN.

Particular embodiments include generating the periodic patterns that may be used to configure interruptions or "gaps" in the communication for a UE that is communicating in CM_CONNECTED/RRC_CONNECTED mode with PLMN1 using credentials from USIM1 (for the purpose of performing "predictable" or periodic procedures in PLMN2). The gaps are then used by the UE to switch to another system (PLMN2) utilizing other credentials (USIM2) to ,e.g., listen for pages.

The periodic pattern is based on at least the time properties of the following procedures in the second PLMN. One procedure is paging and is based on the paging frame(s) and paging occasions configured for the UE. In one option the UE does not need to consider all PO's but a subset of them. While that may degrade paging performance in the second PLMN, it avoids degrading the throughput performance in the first PLMN.

If a subset of POs is used, then, to eliminate the UE becoming unreachable, the UE informs the second PLMN about the selected subset of POs according to following options. The UE may inform the second PLMN over non-access stratum (NAS) providing the information about the subset of POs selected for monitoring to the core network (CN) serving the UE, e.g., to the serving AMF. The serving AMF includes the subset of POs selected for monitoring in the paging message sent over the radio access network (RAN)/CN interface, e.g. NG Application Protocol (NGAP) paging message. The RAN, e.g. gNB, conducting the paging process takes the subset of POs selected for monitoring into consideration when selecting what POs to use.

If the UE is in RRC _INACTIVE state in the second PLMN, the UE informs the RAN, e.g. the gNB, about the subset of POs selected for monitoring using the RRC protocol and the gNB stores this information in the UE Access Stratum (AS) Context. The gNB hosting the UE AS Context uses this information to determine valid POs at a subsequent paging process.

In one option, there is a PLMN priority defined, e.g., first PLMN has higher priority than second PLMN. In that case, the UE can reduce the paging monitoring in the second PLMN so it reduces the gaps (e.g., reduces duration of the window pattern and/or increases periodicity, making less frequent leaves from the first PLMN). If the second PLMN has higher priority the UE does not perform this action and generates a pattern for which it needs to monitor all configured paging occasions configured by the second PLMN. The prioritization may be determined by the end user, e.g., via application layer at the UE. The prioritization may be informed from the UE the lowest priority PLMN, so it is aware of that and prepared to accept lower performance.

Other procedures related to the periodic pattern are DRX cycle configuration, periods the UE needs to perform serving cell measurements for S-criteria evaluation, periods the UE needs to perform inter-frequency and inter-RAT measurements for cell detection, and periodic registration area updates.

In some embodiments, the periodic pattern is a set of time domain windows (or "gaps") repeated periodically. In one option, the periodic pattern is defined based on time domain units associated to the frame structure of the first PLMN1, so that PLMN2 easily interprets how to act based on the report. To provide the "gaps", particular embodiments consider that the UE should translate possible activities to be performed in, e.g. PLMN2, to "gaps" to be used in the network within PLMN1, called henceforth as "gap mapping".

Some of the properties of the periodic pattern include window duration, window periodicity and offset for starting the first window in the pattern (having a time reference of the first or the second PLMN). An example of signaling is shown below:

```
PeriodicPattern ::=                          SEQUENCE {
    periodicityAndOffset                 CHOICE {
        sf5                              INTEGER (0..4),
        sf10                                 INTEGER (0..9),
        sf20                                 INTEGER (0..19),
        sf40                                 INTEGER (0..39),
        sf80                                 INTEGER (0..79),
        sf160                                INTEGER (0..159)
    },
    duration                             ENUMERATED { sf1, sf2, sf3,
sf4, sf5 }
    }
```

| *SSB-MTC* field descriptions |
|---|
| *duration* |

(continued)

| SSB-MTC field descriptions |
|---|
| Duration of the window in which the UE wants to perform operations in the second PLMN (e.g. PLMN2) if the UE is operating in multi-SIM. It is given in number of subframes associated to the first PLMN (see TS 38.213, clause 4.1), i.e., the PLMN receiving the indication of the Periodic Pattern. |
| *periodicityAndOffset*<br>Periodicity and offset of the Periodic Pattern in which the UE wants to perform operations in the second PLMN (e.g. PLMN2) if the UE is operating in multi-SIM. Periodicity and offset are given in number of subframes. |

Upon reception of these parameters, in some embodiments, the network interprets the patterns and sets up gaps in accordance with the received *periodicityAndOffset* parameter (providing *Periodicity* and *Offset* value for the following condition). The first subframe of each periodic pattern occasion occurs at an SFN and subframe of the NR SpCell meeting the following condition:

```
SFN mod T = (FLOOR (Offset/10));
if the Periodicity is larger than sf5:
   subframe = Offset mod 10;
else:
   subframe = Offset or (Offset +5);
with T = CEIL(Periodicity/10).
```

Other options for what is reported in terms of information include at least one or more of the following:

- Preferred Connected mode DRX cycle configuration: connected mode DRX preferences can be reported to reflect periods where the UE may switch to another network.

- Preferred Measurement gap configuration: a minimum time the UE needs for the gaps and whether it needs it for only FR1, only FR2 or per UE gaps

- Preferred radio frames to be silent, i.e., where the first PLMN should not schedule the UE

- Preferred subframes to be silent, i.e., where the first PLMN should not schedule the UE Further examples on how the translation and signaling can be done are provided below.

In some embodiments, the UE transmits a first indication with information on the periodic pattern to the first PLMN.
In one option the transmission is triggered by the UE being registered in the second PLMN (and being configured to perform actions in PLMN2, e.g., monitoring of paging occasions).
In another option the transmission is triggered by a request from the PLMN1. The request from PLMN1 may be in response to an indication from the UE that such information is available and/or that the UE is a Multi-USIM UE that needs to perform actions in another PLMN (e.g., PLMN2).
In another option, the network may decide to configure the UE to allow it to transmit the periodic pattern according to network defined rules (e.g., send a new pattern at the expiration of a timer) and/or UE implementation based (e.g., when the UE identifies that it may not be able to perform operations in PLMN2 with the current DRX/measurement gap configurations in PLMN1).
The UE can report preferences (in the indications described above) for such periodic pattern while being connected to the network by using RRC configured UE assistance information. The various options for what is reported in terms of information include at least one of the following. In one option the indication is an information that the UE will create autonomous gaps according to the pattern (until the UE informs otherwise, e.g., if that is not valid any longer, e.g., change of the POs pattern in the second PLMN). The indication may contain a cause value, e.g., indicating this is for multi-USIM operation.
Another option is a report of preference, i.e., the UE will not create any gaps, but rather inform preference so that the network determines the final configuration the UE should follow, if any new configuration is provided.
Some embodiments include monitoring the occurrence of at least one idle event in the second PLMN and transmitting a second indication to the first PLMN upon the occurrence of the event. The idle event may be at least one of the following.
Some events are periodic events, e.g., inter-frequency cell reselection measurements. After the event to start is fulfilled it becomes a periodic event. Thus, a UE may send an update of the periodic pattern considering the durations the UE needs to perform these measurements, e.g., including additional occasions like in a delta signaling.

In one option, the second indication is of the same type of indication as the first indication, but containing only additional information (compared to the previously indicated periodic pattern), determined by the UE based on the need to perform inter-frequency measurements, and including in the updated pattern additional occasions for the measurements (or increasing the duration of the window).

In one option, the update of the pattern replaces the previous pattern. This means the new pattern can be of the same field/IE of the previous pattern.

In another option the UE includes in the indication the event/cause value (or a list of events/causes), e.g., inter-frequency measurement in this case. This may enable the network to determine a new pattern, or to understand the reason why the UE needs the gaps.

Some events are more aperiodic, i.e., they do not lead to an additional periodic pattern. There are different ways to handle the aperiodic idle events, regarding how to indicate the event to the network. The usage may depend, e.g., how long the UE is expected to be absent.

In some embodiments the UE indicates "Bye first PLMN, I will be away for X seconds."

In some embodiments, the UE requests from the first PLMN "May I leave for X seconds?" The UE waits for confirmation from first PLMN and, if it receives, it leaves; otherwise it does not.

In some embodiments, the UE informs "I will be away (no time information)." When the UE is done, it informs the first PLMN that it is back, e.g., over PUCCH, RACH, RRC, etc.

In some embodiments, the UE informs "I will be away (with time information)." When the UE is done, it just returns without informing.

Some events include one-time short events (i.e., not possible to know a periodicity associated, or aperiodic pattern), e.g., cell reselection and acquisition of system information in the newly selected cell. In this case, the UE can include in the second indication information such as the time off it needs to complete the procedure.

In one option, as the procedure is expected to be completed within a short time (10ms or 100s of ms), the UE does not expect a response from the first PLMN when it indicates that is leaving for a short time. In other words, the UE sends the message and directly switches to the second PLMN to perform the procedure.

As another option, the UE opportunistically continues and performs the actions in the second PLMN without indicating its absence to the first PLMN. If cell reselection is being triggered, it may be because the UE was performing measurements, i.e., within the configured periodic pattern. Thus, the UE just continues the operations like SIBs acquisition.

It may be that while the UE was performing these operations outside the configured pattern, the network (first PLMN) tries to schedule something and fails, because the UE was not monitoring PDCCH on the first PLMN. Thus, one option is that upon returning from a procedure in the second PLMN performed outside the configured gaps/pattern (i.e., opportunistically), the UE informs the first PLMN what has happened in case the first PLMN wants to perform some root cause analyses, e.g., the UE indicates that it was performing system information acquisition in the second PLMN, or simply a one shot event. Or, alternatively, the UE indicates that and when it has finished the operation it indicates to the first PLMN, e.g., with a PUCCH, scheduling request, random access, an RRC message, etc.

Some events include more unpredictable one-time long events, e.g., entering connected state after paging reception. This is a one-time but relatively long event and quite unpredictable, i.e., not possible to know a periodicity associated, or aperiodic pattern.

In one option, the UE transmits the second indication and waits for a message (e.g., response) from the network, at least for some time, before it leaves/switches to the second PLMN to respond to paging by transitioning from IDLE to CONNECTED.

In one option, upon transmitting the second indication, the UE starts a timer. Upon receiving a response (e.g., indication to transition to IDLE state) the UE stops the timer. If the timer expires, the UE enters IDLE and indicates a failure to higher layers.

In one option, the second indication is an indication that the UE wants to enter a dormant state, e.g., like IDLE, in the first PLMN. Notice that on the second PLMN, this would lead to a bit longer time for the UE to respond to paging (so that it could be beneficial for the second PLMN to be aware this may happen, e.g., by knowing this is a multi-SIM UE).

Some events include more predictable one-time long, e.g., mobility registration area update (RAU). This is a one-time but relatively long event, though different from paging it can be a bit more predictable.

In one option, the UE transmits the second indication and waits for a message (e.g., response) from the network, at least for some time, before it leaves/switches to the second PLMN to conduct RAU by transitioning from Connected to Idle in the first PLMN and transitioning from IDLE to CONNECTED in the second PLMN.

In one option, upon transmitting the second indication, the UE starts a timer. Upon receiving a response (e.g., indication to transition to IDLE state) the UE stops the timer. If the timer expires, the UE enters IDLE and indicates a failure to higher layers.

In one option, the second indication is an indication that the UE wants to enter a dormant state, e.g., like IDLE, in the first PLMN. Notice that on the second PLMN, this would lead to a bit longer time for the UE to become reachable (so that it could be beneficial for the second PLMN to be aware this may happen, e.g., by knowing this is a multi-SIM UE, e.g. by having a more relaxed paging strategy configuration).

In some embodiments, each procedure may be indicated to the first PLMN with the second indication. It may be pre-determined that for a given procedure the UE does not expect to be transitioned by the first PLMN to RRC _IDLE, e.g., if a short time is needed for completing the procedure. Then the UE does not need to wait for a message in the first PLMN before it continues with the second PLMN.

If not pre-determined, the UE may wait for some time for a response from the first PLMN. That may be a message changing the DRX cycle in the first PLMN to a longer cycle (so the UE can complete its action in the second PLMN), e.g., a MAC CE indicating the usage of a long DRX cycle in the first PLMN. The UE may start a timer for waiting for the response. If the timer expires, the UE enters RRC_IDLE in the first PLMN.

In one option each event may be indicated to the first PLMN so the first PLMN determines which action to take, e.g., change DRX cycle to long DRX, suspend the UE, release the UE, or keep the UE in connected but stop scheduling for some time.

Particular embodiments include a method performed by a first network node. The method comprises receiving from a CONNECTED UE a first indication with information on the periodic pattern for the first PLMN. The first network node may be an NR node, a gNodeB, an eNodeB, associated to a radio access network.

In some embodiments, upon reception of the first indication, the first network node can avoid scheduling the UE in the gaps. The network node can consider that when determining the UE's PDCCH configuration(s), where the reported periods are not configured as periods the UE needs to monitor PDCCH, or CORESETS, or simply when determining when to provide downlink control information (DCI).

In some embodiments, upon reception of the first indication, the first network node configures the UE with a gap configuration, such as a measurement gap that is not just used for RRM measurements on non-serving frequencies but also for idle mode operations the UE needs to perform on the second PLMN, e.g., monitoring of paging occasions, measurements for cell reselection, etc.

In some embodiments, upon reception of the first indication, the first network node configures the UE with a DRX cycle configured based on the first indication.

The method further comprises receiving from the CONNECTED UE a second indication to the first PLMN upon the occurrence of the event, wherein the second indication is transmitted by the CONNECTED UE upon the occurrence of at least one idle event in the second PLMN.

In some embodiments, upon reception of the second indication, the first network node determines to suspend the UE to INACTIVE state by transmitting an RRC Release message with a suspend configuration;

In some embodiments, upon reception of the second indication, the first network node determines to release the UE to IDLE state, by transmitting an RRC Release message without a suspend configuration;

In some embodiments, upon reception of the second indication, the first network node configures the UE with a DRX cycle configured based on the second indication.

In some embodiments, upon reception of the second indication, the first network node stops scheduling the UE until the UE comes back to PLMN1. In this embodiment, the UE performs the operation in PLMN2 triggered by the event (e.g., system information acquisition), and after some time (e.g., upon finishing the triggered operation), it indicates to PLMN1, so that PLMN1 can act accordingly, e.g., start scheduling the UE again.

In some embodiments, the first network node transmits to the UE an indication that the UE is to release the second PLMN. Upon reception, the UE leaves the second PLMN (e.g., and sends an indication to the second PLMN and/or enter IDLE).

Some embodiments include gap assistance information. For the first indication, the UE translates its activities to be performed in the network within PLMN2 to simple gaps to be provided for the network within PLMN1 (i.e., "gap mapping"). In this manner, the latter network does not need to understand deployment aspects related to the PLMN2 and may account just for interruptions within the connection of the UE.

An example of the configuration, reporting and according procedures associated to the first indication is provided below for 38.331 (but can be similarly applicable to 36.331 as well).

The IE *OtherConfig* contains configuration related to miscellaneous other configurations.

*OtherConfig* information element

```
-- ASN1START
-- TAG-OTHERCONFIG-START

OtherConfig ::=                       SEQUENCE {
    delayBudgetReportingConfig  CHOICE{
        release                       NULL,
        setup                         SEQUENCE{
            delayBudgetReportingProhibitTimer   ENUMERATED {s0, s0dot4, s0dot8, s1dot6, s3,
s6, s12, s30}
        }
    }
OPTIONAL        -- Need M
}

OtherConfig-v1540 ::=          SEQUENCE {
    overheatingAssistanceConfig    SetupRelease {OverheatingAssistanceConfig}
OPTIONAL, -- Need M
    ...
}
CandidateServingFreqListNR-r16 ::= SEQUENCE (SIZE (1..maxFreqIDC-r16)) OF ARFCN-ValueNR

OtherConfig-v1610 ::=                      SEQUENCE {
    idc-AssistanceConfig-r16              SetupRelease {IDC-AssistanceConfig-r16}
OPTIONAL, -- Need M

        drx-PreferenceConfig-r16              SetupRelease {DRX-PreferenceConfig-r16}
    OPTIONAL, -- Need M
    ############### omitted unchanged parts ###############
}

DRX-PreferenceConfig-r16 ::=       SEQUENCE {
    drx-PreferenceProhibitTimer-r16       ENUMERATED {
                                    s0, s0dot5, s1, s2, s3, s4, s5, s6, s7,
                                    s8, s9, s10, s20, s30, spare2, spare1}
}

OtherConfig-v1700 ::=                      SEQUENCE {
    drx-PreferenceConfig-r17              SetupRelease {DRX-PreferenceConfig-r17}
OPTIONAL, -- Need M
}

DRX-PreferenceConfig-r17 ::=       SEQUENCE {
    drx-PreferenceProhibitTimer-r16       ENUMERATED {
                                    s0, s0dot5, s1, s2, s3, s4, s5, s6, s7,
                                    s8, s9, s10, s20, s30, spare2, spare1},
    reportingMode                    ENUMERATED {powerSaving, MUSIM, both}
}

-- TAG-OTHERCONFIG-STOP
-- ASN1STOP
```

| *OtherConfig* field descriptions |
|---|
| *drx-PreferenceConfig* <br> Configuration for the UE to report assistance information to inform the gNB about the UE's DRX preferences for power saving and/or MU-SIM operation. If *drx-PreferenceConfig-r16* is configured, the UE is allowed to report DRX preferences for power saving. If *drx-PreferenceConfig-r17* is configured, the UE report on DRX preferences may correspond to power saving, MU-SIM or both power saving and MU-SIM. The gNB cannot configure both *drx-PreferenceConfig-r16* and *drx-PreferenceConfig-r17*. |
| *drx-PreferenceProhibitTimer* <br> Prohibit timer for DRX preferences assistance information reporting. Value in seconds. Value *s0* means prohibit timer is set to 0 seconds, value *s0dot5* means prohibit timer is set to 0.5 seconds, value *s1* means prohibit timer is set to 1 second and so on. |
| *idc AssistanceConfig* |

(continued)

| *OtherConfig* field descriptions |
| --- |
| Configuration for the UE to report assistance information to inform the gNB about UE detected IDC problem. |
| *reportingMode*<br>Indicates whether the UE report on DRX preferences should correspond to power saving purposes, MU-SIM purposes, or both power saving and MU-SIM. |

The *UEAssistanceInformation* message is used for the indication of UE assistance information to the network.

Signalling radio bearer: SRB1, SRB3
RLC-SAP: AM
Logical channel: DCCH
Direction: UE to Network

*UEAssistanceInformation message*

```
-- ASN1START
-- TAG-UEASSISTANCEINFORMATION-START

UEAssistanceInformation ::=          SEQUENCE {
    criticalExtensions                   CHOICE {
        ueAssistanceInformation              UEAssistanceInformation-IEs,
        criticalExtensionsFuture             SEQUENCE {}
    }
}


UEAssistanceInformation-IEs ::=      SEQUENCE {
    delayBudgetReport                    DelayBudgetReport                  OPTIONAL,
    lateNonCriticalExtension             OCTET STRING                       OPTIONAL,
    nonCriticalExtension                 UEAssistanceInformation-v1540-IEs  OPTIONAL
}


############### omitted unchanged parts ################

UEAssistanceInformation-v1610-IEs ::= SEQUENCE {
    idc-Assistance-r16                   IDC-Assistance-r16                      OPTIONAL,
    drx-Preference-r16                   DRX-Preference-r16                      OPTIONAL,
    maxBW-Preference-r16                 MaxBW-Preference-r16                    OPTIONAL,
    maxCC-Preference-r16                 MaxCC-Preference-r16                    OPTIONAL,
    maxMIMO-LayerPreference-r16          MaxMIMO-LayerPreference-r16             OPTIONAL,
    minSchedulingOffsetPreference-r16    MinSchedulingOffsetPreference-r16       OPTIONAL,
    releasePreference-r16                ReleasePreference-r16                   OPTIONAL,
    sl-UE-AssistanceInformationNR-r16    SL-UE-AssistanceInformationNR-r16       OPTIONAL,
    referenceTimeInfoPreference-r16      BOOLEAN                                 OPTIONAL,
    nonCriticalExtension                 UEAssistanceInformation-v1700-IEs
OPTIONAL
}


DRX-Preference-r16 ::=               SEQUENCE {
    preferredDRX-InactivityTimer-r16     ENUMERATED {
                                             ms0, ms1, ms2, ms3, ms4, ms5, ms6, ms8, ms10,
ms20, ms30, ms40, ms50, ms60, ms80,
                                             ms100, ms200, ms300, ms500, ms750, ms1280, ms1920,
ms2560, spare9, spare8,
                                             spare7, spare6, spare5, spare4, spare3, spare2,
spare1} OPTIONAL,
    preferredDRX-LongCycle-r16           ENUMERATED {
                                             ms10, ms20, ms32, ms40, ms60, ms64, ms70, ms80,
ms128, ms160, ms256, ms320, ms512,
                                             ms640, ms1024, ms1280, ms2048, ms2560, ms5120,
ms10240, spare12, spare11, spare10,
                                             spare9, spare8, spare7, spare6, spare5, spare4,
spare3, spare2, spare1 } OPTIONAL,
    preferredDRX-ShortCycle-r16          ENUMERATED {
                                             ms2, ms3, ms4, ms5, ms6, ms7, ms8, ms10, ms14,
ms16, ms20, ms30, ms32,
                                             ms35, ms40, ms64, ms80, ms128, ms160, ms256,
ms320, ms512, ms640, spare9,
                                             spare8, spare7, spare6, spare5, spare4, spare3,
spare2, spare1 } OPTIONAL,
    preferredDRX-ShortCycleTimer-r16     INTEGER (1..16)    OPTIONAL
}

UEAssistanceInformation-v1700-IEs ::= SEQUENCE {
    drx-Preference-r17                   DRX-Preference-r17                      OPTIONAL,
    nonCriticalExtension                 SEQUENCE {}                             OPTIONAL
}


                              -- TAG-UEASSISTANCEINFORMATION-STOP
                              -- ASN1STOP
```

| *UEAssistanceInformation* field descriptions |
|---|
| *drx-Preference-r16, drx-Preference-r17* |

(continued)

| *UEAssistanceInformation* field descriptions |
|---|
| Indicates the UE-preferred DRX configurations. The field *drx-Preference-r16* indicates the UE preferences for UE power saving purposes only. The field *drx-Preference-r17* indicates the UE preferences for UE power saving purposes and/or MU-SIM connection purposes, according to *DRX-PreferenceConfig-r17*. |
| *interferenceDirection*<br>Indicates the direction of IDC interference. Value *nr* indicates that only NR is victim of IDC interference, value *other* indicates that only another radio is victim of IDC interference and value *both* indicates that both NR and another radio are victims of IDC interference. The other radio refers to either the ISM radio or GNSS (see TR 36.816). |
| *messageSize*<br>Indicates the maximum TB size based on the observed traffic pattern. The value refers to the index of TS 38.321, table 6.1.3.1-2. |
| *minSchedulingOffsetPreference*<br>Indicates the UE's preferences on *minimumSchedulingOffset* of cross-slot scheduling for power saving. |

| *DRX-Preference* field descriptions |
|---|
| *preferredDRX-InactivityTimer*<br>Indicates the UE's preferred DRX inactivity timer length. Value in ms (milliSecond). *ms0* corresponds to 0, *ms1* corresponds to 1 ms, *ms2* corresponds to 2 ms, and so on. If the field is absent from the *DRX-Preference* IE, it is interpreted as the UE having no preference for the DRX inactivity timer. |
| *preferredDRX-LongCycle*<br>Indicates the UE's preferred long DRX cycle length. Value in ms. *ms10* corresponds to 10ms, *ms20* corresponds to 20 ms, *ms32* corresponds to 32 ms, and so on. If *preferredDRX-ShortCycle* is provided, the value of *preferredDRX-LongCycle* shall be a multiple of the *preferredDRX-ShortCycle* value. If the field is absent from the *DRX-Preference* IE, it is interpreted as the UE having no preference for the long DRX cycle. |
| *preferredDRX-ShortCycle*<br>Indicates the UE's preferred short DRX cycle length. Value in ms. *ms2* corresponds to 2ms, *ms3* corresponds to 3 ms, *ms4* corresponds to 4 ms, and so on. If the field is absent from the *DRX-Preference* IE, it is interpreted as the UE having no preference for the short DRX cycle. |
| *preferredDRX-ShortCycle Timer*<br>Indicates the UE's preferred short DRX cycle timer. Value in multiples of *preferredDRX ShortCycle*. A value of 1 corresponds to *preferredDRX-ShortCycle,* a value of 2 corresponds to 2 * *preferredDRX-ShortCycle* and so on. If the field is absent from the *DRX-Preference* IE, it is interpreted as the UE having no preference for the short DRX cycle timer. A preference for the short DRX cycle is indicated when a preference for the short DRX cycle timer is indicated. |

The purpose of the UE assistance information procedure is for the UE to inform the network of: (a) its delay budget report carrying desired increment/decrement in the connected mode DRX cycle length; (b) its overheating assistance information; (c) its IDC assistance information; (d) its preference on DRX parameters for power saving and/or MU-SIM; (e) its preference on the maximum aggregated bandwidth for power saving; (f) its preference on the maximum number of secondary component carriers for power saving; (g) its preference on the maximum number of MIMO layers for power saving; (h) its preference on the minimum scheduling offset for cross-slot scheduling for power saving; (i) assistance information to transition out of RRC_CONNECTED state when the UE does not expect to send or receive data in the near future; (j) configured grant assistance information for NR sidelink communication; and/or (k) its preference in being provisioned with reference time information.

A UE capable of providing delay budget report in RRC _CONNECTED may initiate the procedure in several cases, including upon being configured to provide delay budget report and upon change of delay budget preference.

A UE capable of providing overheating assistance information in RRC_CONNECTED may initiate the procedure if it was configured to do so, upon detecting internal overheating, or upon detecting that it is no longer experiencing an overheating condition.

A UE capable of providing IDC assistance information in RRC _CONNECTED may initiate the procedure if it was configured to do so, upon detecting IDC problem if the UE did not transmit an IDC assistance information since it was configured to provide IDC indications, or upon change of IDC problem information.

A UE capable of providing its preference on DRX parameters of a cell group for power saving and/or MU-SIM in RRC_CONNECTED may initiate the procedure in several cases, if it was configured to do so, including upon having a preference on DRX parameters and upon change of its preference on DRX parameters.

A UE capable of providing its preference on the maximum aggregated bandwidth of a cell group for power saving in RRC_CONNECTED may initiate the procedure in several cases, if it was configured to do so, including upon having a maximum aggregated bandwidth preference and upon change of its maximum aggregated bandwidth preference.

A UE capable of providing its preference on the maximum number of secondary component carriers of a cell group for power saving in RRC_CONNECTED may initiate the procedure in several cases, if it was configured to do so, including upon having a maximum number of secondary component carriers preference and upon change of its maximum number of secondary component carriers preference.

A UE capable of providing its preference on the maximum number of MIMO layers of a cell group for power saving in RRC_CONNECTED may initiate the procedure in several cases, if it was configured to do so, including upon having a maximum number of MIMO layers preference and upon change of its maximum number of MIMO layers preference.

A UE capable of providing its preference on the minimum scheduling offset for cross-slot scheduling of a cell group for power saving in RRC_CONNECTED may initiate the procedure in several cases, if it was configured to do so, including upon having a minimum scheduling offset preference and upon change of its minimum scheduling offset preference.

A UE capable of providing assistance information to transition out of RRC_CONNECTED state may initiate the procedure if it was configured to do so, upon determining that it prefers to transition out of RRC_CONNECTED state, or upon change of its preferred RRC state.

A UE capable of providing configured grant assistance information for NR sidelink communication in RRC_CONNECTED may initiate the procedure in several cases, including upon being configured to provide traffic pattern information and upon change of traffic patterns.

A UE capable of providing an indication of its preference in being provisioned with reference time information may initiate the procedure upon being configured to provide this indication, or if it was configured to provide this indication and upon change of its preference.

Upon initiating the procedure, the UE shall:

> 1>if configured to provide delay budget report:

>> 2> if the UE did not transmit a *UEAssistanceInformation* message with *delayBudgetReport* since it was configured to provide delay budget report; or
>> 2>if the current delay budget is different from the one indicated in the last transmission of the *UEAssistanceInformation* message including *delayBudgetReport* and timer T342 is not running:

>>> 3> start or restart timer T342 with the timer value set to the *delayBudgetReportingProhibitTimer;*

>>> 3>initiate transmission of the *UEAssistanceInformation* message in accordance with 5.7.4.3 to provide a delay budget report;

> 1>if configured to provide overheating assistance information:

>> 2>if the overheating condition has been detected and T345 is not running; or

>> 2>if the current overheating assistance information is different from the one indicated in the last transmission of the *UEAssistanceInformation* message including *overheating Assistance* and timer T345 is not running:

>>> 3> start timer T345 with the timer value set to the *overheatingIndicationProhibitTimer;*

>>> 3>initiate transmission of the *UEAssistanceInformation* message in accordance with 5.7.4.3 to provide overheating assistance information;

> 1>if configured to provide IDC assistance information:

2>if the UE did not transmit a *UEAssistanceInformation* message with *idc-Assistance* since it was configured to provide IDC assistance information:

3>if on one or more frequencies included in *candidateServingFreqListNR,* the UE is experiencing IDC problems that it cannot solve by itself; or

3>if on one or more supported UL CA combination comprising of carrier frequencies included in *candidate-ServingFreqListNR,* the UE is experiencing IDC problems that it cannot solve by itself:
4> initiate transmission of the *UEAssistanceInformation* message in accordance with 5.7.4.3 to provide IDC assistance information;

2> else if the current IDC assistance information is different from the one indicated in the last transmission of the *UEAssistanceInformation* message:
3>initiate transmission of the *UEAssistanceInformation* message in accordance with 5.7.4.3 to provide IDC assistance information;

The term "IDC problems" refers to interference issues applicable across several subframes/slots where not necessarily all the subframes/slots are affected.

For the frequencies on which a serving cell or serving cells is configured that is activated, IDC problems consist of interference issues that the UE cannot solve by itself, during either active data exchange or upcoming data activity which is expected in up to a few hundred milliseconds.

For frequencies on which a SCell or SCells is configured that is deactivated, reporting IDC problems indicates an anticipation that the activation of the SCell or SCells would result in interference issues that the UE would not be able to solve by itself.

For a non-serving frequency, reporting IDC problems indicates an anticipation that if the non-serving frequency or frequencies became a serving frequency or serving frequencies then this would result in interference issues that the UE would not be able to solve by itself.

1>if configured to provide its preference on DRX parameters of a cell group for power saving and/or MU-SIM:

2>if the UE has a preference on DRX parameters of the cell group and the UE did not transmit a *UEAssistanceInformation* message with *drx-Preference* for the cell group since it was configured to provide its preference on DRX parameters of the cell group for power saving and/or MU-SIM; or

2>if the current *drx-Preference* information for the cell group is different from the one indicated in the last transmission of the *UEAssistanceInformation* message including *drx-Preference* for the cell group and timer T346a associated with the cell group is not running:

3> start the timer T346a with the timer value set to the *drx-PreferenceProhibitTimer* of the cell group;

3>initiate transmission of the *UEAssistanceInformation* message in accordance with 5.7.4.3 to provide the current *drx-Preference*;

1>if configured to provide its preference on the maximum aggregated bandwidth of a cell group for power saving and/or MU-SIM:

2>if the UE has a preference on the maximum aggregated bandwidth of the cell group and the UE did not transmit a *UEAssistanceInformation* message with *maxBW-Preference* for the cell group since it was configured to provide its preference on the maximum aggregated bandwidth of the cell group for power saving; or

2>if the current *maxBW-Preference* information for the cell group is different from the one indicated in the last transmission of the *UEAssistanceInformation* message including *maxBW-Preference* for the cell group and timer T346b associated with the cell group is not running:

3> start the timer T346b with the timer value set to the *maxBW-PreferenceProhibitTimer* of the cell group;

3>initiate transmission of the *UEAssistanceInformation* message in accordance with 5.7.4.3 to provide the current *maxBW-Preference;*

The UE shall set the contents of the *UEAssistanceInformation* message as follows:

> 1> if transmission of the *UEAssistanceInformation* message is initiated to provide a delay budget report according to 5.7.4.2 or 5.3.5.3;
> 2> set *delayBudgetReport* to *typeI* according to a desired value;
> ############### omitted unchanged parts ###############

> 1> if transmission of the *UEAssistanceInformation* message is initiated to provide *drx-Preference* of a cell group for power saving according to 5.7.4.2 or 5.3.5.3:

>> 2>include *drx-Preference* in the *UEAssistanceInformation* message;
>> 2>if the UE has a preference on DRX parameters for the cell group:

>>> 3>if the UE has a preference for the long DRX cycle:
>>> 4> include *preferredDRX-LongCycle* in the *DRX-Preference* IE and set it to the preferred value;

>>> 3> if the UE has a preference for the DRX inactivity timer:
>>> 4> include *preferredDRX-InactivityTimer* in the *DRX-Preference* IE and set it to the preferred value;

>>> 3> if the UE has a preference for the short DRX cycle:
>>> 4> include *preferredDRX-ShortCycle* in the *DRX-Preference* IE and set it to the preferred value;

>>> 3> if the UE has a preference for the short DRX timer:
>>> 4> include *preferredDRX-ShortCycleTimer* in the *DRX-Preference* IE and set it to the preferred value;

>> 2> else (if the UE has no preference on DRX parameters for the cell group):
>> 3> do not include *preferredDRX-LongCycle, preferredDRX-Inactivity Timer, preferredDRX-ShortCycle* and *preferredDRX-ShortCycle Timer* in the *DRX Preference* IE;

The power saving indication below may be used, but creating a new configuration as done for 5.1 due to backwards compatibility aspect since the Rel-16 indication is only for power saving.

```
ReleasePreference-r16 ::=          SEQUENCE {
    preferredRRC-State-r16              ENUMERATED {idle, inactive, connected, outOfConnected}
```

FIGURE 9 illustrates an example wireless network, according to certain embodiments. The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network 106 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 160 and WD 110 comprise various components described in more detail below. These components work together to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network.

Examples of network nodes include, but are not limited to, access points (APs) (e.g., radio access points), base stations (BSs) (e.g., radio base stations, Node Bs, evolved Node Bs (eNBs) and NR NodeBs (gNBs)). Base stations may be categorized based on the amount of coverage they provide (or, stated differently, their transmit power level) and may then also be referred to as femto base stations, pico base stations, micro base stations, or macro base stations.

A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs.

As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In FIGURE 9, network node 160 includes processing circuitry 170, device readable medium 180, interface 190, auxiliary equipment 184, power source 186, power circuitry 187, and antenna 162. Although network node 160 illustrated in the example wireless network of FIGURE 9 may represent a device that includes the illustrated combination of hardware components, other embodiments may comprise network nodes with different combinations of components.

It is to be understood that a network node comprises any suitable combination of hardware and/or software needed to perform the tasks, features, functions and methods disclosed herein. Moreover, while the components of network node 160 are depicted as single boxes located within a larger box, or nested within multiple boxes, in practice, a network node may comprise multiple different physical components that make up a single illustrated component (e.g., device readable medium 180 may comprise multiple separate hard drives as well as multiple RAM modules).

Similarly, network node 160 may be composed of multiple physically separate components (e.g., a NodeB component and a RNC component, or a BTS component and a BSC component, etc.), which may each have their own respective components. In certain scenarios in which network node 160 comprises multiple separate components (e.g., BTS and BSC components), one or more of the separate components may be shared among several network nodes. For example, a single RNC may control multiple NodeB's. In such a scenario, each unique NodeB and RNC pair, may in some instances be considered a single separate network node.

In some embodiments, network node 160 may be configured to support multiple radio access technologies (RATs). In such embodiments, some components may be duplicated (e.g., separate device readable medium 180 for the different RATs) and some components may be reused (e.g., the same antenna 162 may be shared by the RATs). Network node 160 may also include multiple sets of the various illustrated components for different wireless technologies integrated into network node 160, such as, for example, GSM, WCDMA, LTE, NR, WiFi, or Bluetooth wireless technologies. These wireless technologies may be integrated into the same or different chip or set of chips and other components within network node 160.

Processing circuitry 170 is configured to perform any determining, calculating, or similar operations (e.g., certain obtaining operations) described herein as being provided by a network node. These operations performed by processing circuitry 170 may include processing information obtained by processing circuitry 170 by, for example, converting the obtained information into other information, comparing the obtained information or converted information to information stored in the network node, and/or performing one or more operations based on the obtained information or converted information, and as a result of said processing making a determination.

Processing circuitry 170 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 160 components, such as device readable medium 180, network node 160 functionality.

For example, processing circuitry 170 may execute instructions stored in device readable medium 180 or in memory within processing circuitry 170. Such functionality may include providing any of the various wireless features, functions, or benefits discussed herein. In some embodiments, processing circuitry 170 may include a system on a chip (SOC).

In some embodiments, processing circuitry 170 may include one or more of radio frequency (RF) transceiver circuitry 172 and baseband processing circuitry 174. In some embodiments, radio frequency (RF) transceiver circuitry 172 and baseband processing circuitry 174 may be on separate chips (or sets of chips), boards, or units, such as radio units and digital units. In alternative embodiments, part or all of RF transceiver circuitry 172 and baseband processing circuitry 174 may be on the same chip or set of chips, boards, or units

In certain embodiments, some or all of the functionality described herein as being provided by a network node, base station, eNB or other such network device may be performed by processing circuitry 170 executing instructions stored on device readable medium 180 or memory within processing circuitry 170. In alternative embodiments, some or all of the functionality may be provided by processing circuitry 170 without executing instructions stored on a separate or discrete device readable medium, such as in a hard-wired manner. In any of those embodiments, whether executing instructions stored on a device readable storage medium or not, processing circuitry 170 can be configured to perform the described functionality. The benefits provided by such functionality are not limited to processing circuitry 170 alone or to other components of network node 160 but are enjoyed by network node 160 as a whole, and/or by end users and the wireless network generally.

Device readable medium 180 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry 170. Device readable medium 180 may store any suitable instructions, data or information, including a computer program, software, an application including one or more of logic, rules, code, tables, etc. and/or other instructions capable of being executed by processing circuitry 170 and, utilized by network node 160. Device readable medium 180 may be used to store any calculations made by processing circuitry 170 and/or any data received via interface 190. In some embodiments, processing circuitry 170 and device readable medium 180 may be considered to be integrated.

Interface 190 is used in the wired or wireless communication of signaling and/or data between network node 160, network 106, and/or WDs 110. As illustrated, interface 190 comprises port(s)/terminal(s) 194 to send and receive data, for example to and from network 106 over a wired connection. Interface 190 also includes radio front end circuitry 192 that may be coupled to, or in certain embodiments a part of, antenna 162.

Radio front end circuitry 192 comprises filters 198 and amplifiers 196. Radio front end circuitry 192 may be connected to antenna 162 and processing circuitry 170. Radio front end circuitry may be configured to condition signals communicated between antenna 162 and processing circuitry 170. Radio front end circuitry 192 may receive digital data that is to be sent out to other network nodes or WDs via a wireless connection. Radio front end circuitry 192 may convert the digital data into a radio signal having the appropriate channel and bandwidth parameters using a combination of filters 198 and/or amplifiers 196. The radio signal may then be transmitted via antenna 162. Similarly, when receiving data, antenna 162 may collect radio signals which are then converted into digital data by radio front end circuitry 192. The digital data may be passed to processing circuitry 170. In other embodiments, the interface may comprise different components and/or different combinations of components.

In certain alternative embodiments, network node 160 may not include separate radio front end circuitry 192, instead, processing circuitry 170 may comprise radio front end circuitry and may be connected to antenna 162 without separate radio front end circuitry 192. Similarly, in some embodiments, all or some of RF transceiver circuitry 172 may be considered a part of interface 190. In still other embodiments, interface 190 may include one or more ports or terminals 194, radio front end circuitry 192, and RF transceiver circuitry 172, as part of a radio unit (not shown), and interface 190 may communicate with baseband processing circuitry 174, which is part of a digital unit (not shown).

Antenna 162 may include one or more antennas, or antenna arrays, configured to send and/or receive wireless signals. Antenna 162 may be coupled to radio front end circuitry 192 and may be any type of antenna capable of transmitting and receiving data and/or signals wirelessly. In some embodiments, antenna 162 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain embodiments, antenna 162 may be separate from network node 160 and may be connectable to network node 160 through an interface or port.

Antenna 162, interface 190, and/or processing circuitry 170 may be configured to perform any receiving operations and/or certain obtaining operations described herein as being performed by a network node. Any information, data and/or signals may be received from a wireless device, another network node and/or any other network equipment. Similarly, antenna 162, interface 190, and/or processing circuitry 170 may be configured to perform any transmitting operations described herein as being performed by a network node. Any information, data and/or signals may be transmitted to a wireless device, another network node and/or any other network equipment.

Power circuitry 187 may comprise, or be coupled to, power management circuitry and is configured to supply the components of network node 160 with power for performing the functionality described herein. Power circuitry 187 may receive power from power source 186. Power source 186 and/or power circuitry 187 may be configured to provide power to the various components of network node 160 in a form suitable for the respective components (e.g., at a voltage and current level needed for each respective component). Power source 186 may either be included in, or external to, power circuitry 187 and/or network node 160.

For example, network node 160 may be connectable to an external power source (e.g., an electricity outlet) via an input circuitry or interface such as an electrical cable, whereby the external power source supplies power to power circuitry 187. As a further example, power source 186 may comprise a source of power in the form of a battery or battery pack which is connected to, or integrated in, power circuitry 187. The battery may provide backup power should the external power source fail. Other types of power sources, such as photovoltaic devices, may also be used.

Alternative embodiments of network node 160 may include additional components beyond those shown in FIGURE 9 that may be responsible for providing certain aspects of the network node's functionality, including any of the functionality described herein and/or any functionality necessary to support the subject matter described herein. For example, network node 160 may include user interface equipment to allow input of information into network node 160 and to allow output of information from network node 160. This may allow a user to perform diagnostic, maintenance, repair, and other administrative functions for network node 160.

As used herein, wireless device (WD) refers to a device capable, configured, arranged and/or operable to communicate wirelessly with network nodes and/or other wireless devices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air.

In some embodiments, a WD may be configured to transmit and/or receive information without direct human interaction. For instance, a WD may be designed to transmit information to a network on a predetermined schedule, when triggered by an internal or external event, or in response to requests from the network.

Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE). a vehicle-mounted wireless terminal device, etc. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device.

As yet another specific example, in an Internet of Things (IoT) scenario, a WD may represent a machine or other device that performs monitoring and/or measurements and transmits the results of such monitoring and/or measurements to another WD and/or a network node. The WD may in this case be a machine-to-machine (M2M) device, which may in a 3GPP context be referred to as an MTC device. As one example, the WD may be a UE implementing the 3GPP narrow band internet of things (NB-IoT) standard. Examples of such machines or devices are sensors, metering devices such as power meters, industrial machinery, or home or personal appliances (e.g. refrigerators, televisions, etc.) personal wearables (e.g., watches, fitness trackers, etc.).

In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

As illustrated, wireless device 110 includes antenna 111, interface 114, processing circuitry 120, device readable medium 130, user interface equipment 132, auxiliary equipment 134, power source 136 and power circuitry 137. WD 110 may include multiple sets of one or more of the illustrated components for different wireless technologies supported by WD 110, such as, for example, GSM, WCDMA, LTE, NR, WiFi, WiMAX, or Bluetooth wireless technologies, just to mention a few. These wireless technologies may be integrated into the same or different chips or set of chips as other components within WD 110.

Antenna 111 may include one or more antennas or antenna arrays, configured to send and/or receive wireless signals, and is connected to interface 114. In certain alternative embodiments, antenna 111 may be separate from WD 110 and be connectable to WD 110 through an interface or port. Antenna 111, interface 114, and/or processing circuitry 120 may be configured to perform any receiving or transmitting operations described herein as being performed by a WD. Any information, data and/or signals may be received from a network node and/or another WD. In some embodiments, radio front end circuitry and/or antenna 111 may be considered an interface.

As illustrated, interface 114 comprises radio front end circuitry 112 and antenna 111. Radio front end circuitry 112 comprise one or more filters 118 and amplifiers 116. Radio front end circuitry 112 is connected to antenna 111 and processing circuitry 120 and is configured to condition signals communicated between antenna 111 and processing circuitry 120. Radio front end circuitry 112 may be coupled to or a part of antenna 111. In some embodiments, WD 110 may not include separate radio front end circuitry 112; rather, processing circuitry 120 may comprise radio front end circuitry and may be connected to antenna 111. Similarly, in some embodiments, some or all of RF transceiver circuitry 122 may be considered a part of interface 114.

Radio front end circuitry 112 may receive digital data that is to be sent out to other network nodes or WDs via a wireless connection. Radio front end circuitry 112 may convert the digital data into a radio signal having the appropriate channel and bandwidth parameters using a combination of filters 118 and/or amplifiers 116. The radio signal may then be transmitted via antenna 111. Similarly, when receiving data, antenna 111 may collect radio signals which are then converted into digital data by radio front end circuitry 112. The digital data may be passed to processing circuitry 120. In other embodiments, the interface may comprise different components and/or different combinations of components.

Processing circuitry 120 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD 110 components, such as device readable medium 130, WD 110 functionality. Such functionality may include providing any of the various wireless features or benefits discussed herein. For example, processing circuitry 120 may execute instructions stored in device readable medium 130 or in memory within processing circuitry 120 to provide the functionality disclosed herein.

As illustrated, processing circuitry 120 includes one or more of RF transceiver circuitry 122, baseband processing circuitry 124, and application processing circuitry 126. In other embodiments, the processing circuitry may comprise different components and/or different combinations of components. In certain embodiments processing circuitry 120 of WD 110 may comprise a SOC. In some embodiments, RF transceiver circuitry 122, baseband processing circuitry 124, and application processing circuitry 126 may be on separate chips or sets of chips.

In alternative embodiments, part or all of baseband processing circuitry 124 and application processing circuitry 126 may be combined into one chip or set of chips, and RF transceiver circuitry 122 may be on a separate chip or set of chips. In still alternative embodiments, part or all of RF transceiver circuitry 122 and baseband processing circuitry 124 may be on the same chip or set of chips, and application processing circuitry 126 may be on a separate chip or set of chips. In yet other alternative embodiments, part or all of RF transceiver circuitry 122, baseband processing circuitry 124, and application processing circuitry 126 may be combined in the same chip or set of chips. In some embodiments, RF transceiver circuitry 122 may be a part of interface 114. RF transceiver circuitry 122 may condition RF signals for processing circuitry 120.

In certain embodiments, some or all of the functionality described herein as being performed by a WD may be provided by processing circuitry 120 executing instructions stored on device readable medium 130, which in certain embodiments may be a computer-readable storage medium. In alternative embodiments, some or all of the functionality may be provided by processing circuitry 120 without executing instructions stored on a separate or discrete device readable storage medium, such as in a hard-wired manner.

In any of those embodiments, whether executing instructions stored on a device readable storage medium or not, processing circuitry 120 can be configured to perform the described functionality. The benefits provided by such functionality are not limited to processing circuitry 120 alone or to other components of WD 110, but are enjoyed by WD 110, and/or by end users and the wireless network generally.

Processing circuitry 120 may be configured to perform any determining, calculating, or similar operations (e.g., certain obtaining operations) described herein as being performed by a WD. These operations, as performed by processing circuitry 120, may include processing information obtained by processing circuitry 120 by, for example, converting the obtained information into other information, comparing the obtained information or converted information to information stored by WD 110, and/or performing one or more operations based on the obtained information or converted information, and as a result of said processing making a determination.

Device readable medium 130 may be operable to store a computer program, software, an application including one or more of logic, rules, code, tables, etc. and/or other instructions capable of being executed by processing circuitry 120. Device readable medium 130 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry 120. In some embodiments, processing circuitry 120 and device readable medium 130 may be integrated.

User interface equipment 132 may provide components that allow for a human user to interact with WD 110. Such interaction may be of many forms, such as visual, audial, tactile, etc. User interface equipment 132 may be operable to produce output to the user and to allow the user to provide input to WD 110. The type of interaction may vary depending on the type of user interface equipment 132 installed in WD 110. For example, if WD 110 is a smart phone, the interaction may be via a touch screen; if WD 110 is a smart meter, the interaction may be through a screen that provides usage (e.g., the number of gallons used) or a speaker that provides an audible alert (e.g., if smoke is detected).

User interface equipment 132 may include input interfaces, devices and circuits, and output interfaces, devices and circuits. User interface equipment 132 is configured to allow input of information into WD 110 and is connected to processing circuitry 120 to allow processing circuitry 120 to process the input information. User interface equipment 132 may include, for example, a microphone, a proximity or other sensor, keys/buttons, a touch display, one or more cameras, a USB port, or other input circuitry. User interface equipment 132 is also configured to allow output of information from WD 110, and to allow processing circuitry 120 to output information from WD 110. User interface equipment 132 may include, for example, a speaker, a display, vibrating circuitry, a USB port, a headphone interface, or other output circuitry. Using one or more input and output interfaces, devices, and circuits, of user interface equipment 132, WD 110 may communicate with end users and/or the wireless network and allow them to benefit from the functionality described herein.

Auxiliary equipment 134 is operable to provide more specific functionality which may not be generally performed by WDs. This may comprise specialized sensors for doing measurements for various purposes, interfaces for additional types of communication such as wired communications etc. The inclusion and type of components of auxiliary equipment 134 may vary depending on the embodiment and/or scenario.

Power source 136 may, in some embodiments, be in the form of a battery or battery pack. Other types of power sources, such as an external power source (e.g., an electricity outlet), photovoltaic devices or power cells, may also be used. WD 110 may further comprise power circuitry 137 for delivering power from power source 136 to the various parts of WD 110 which need power from power source 136 to carry out any functionality described or indicated herein. Power circuitry 137 may in certain embodiments comprise power management circuitry.

Power circuitry 137 may additionally or alternatively be operable to receive power from an external power source; in which case WD 110 may be connectable to the external power source (such as an electricity outlet) via input circuitry or an interface such as an electrical power cable. Power circuitry 137 may also in certain embodiments be operable to deliver power from an external power source to power source 136. This may be, for example, for the charging of power source 136. Power circuitry 137 may perform any formatting, converting, or other modification to the power from power source 136 to make the power suitable for the respective components of WD 110 to which power is supplied.

Although the subject matter described herein may be implemented in any appropriate type of system using any suitable components, the embodiments disclosed herein are described in relation to a wireless network, such as the example wireless network illustrated in FIGURE 9. For simplicity, the wireless network of FIGURE 9 only depicts network 106, network nodes 160 and 160b, and WDs 110, 110b, and 110c. In practice, a wireless network may further include any additional elements suitable to support communication between wireless devices or between a wireless device and another communication device, such as a landline telephone, a service provider, or any other network node or end device. Of the illustrated components, network node 160 and wireless device (WD) 110 are depicted with additional detail. The wireless network may provide communication and other types of services to one or more wireless devices to facilitate the wireless devices' access to and/or use of the services provided by, or via, the wireless network.

FIGURE 10 illustrates an example user equipment, according to certain embodiments. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE 200 may be any UE identified by the 3rd Generation Partnership Project (3GPP), including a NB-IoT UE, a machine type communication (MTC) UE, and/or an enhanced MTC (eMTC) UE. UE 200, as illustrated in FIGURE 10, is one example of a WD configured for communication in accordance with one or more communication standards promulgated by the 3rd Generation Partnership Project (3GPP), such as 3GPP's GSM, UMTS, LTE, and/or 5G standards. As mentioned previously, the term WD and UE may be used interchangeable. Accordingly, although FIGURE 10 is a UE, the components discussed herein are equally applicable to a WD, and vice-versa.

In FIGURE 10, UE 200 includes processing circuitry 201 that is operatively coupled to input/output interface 205, radio frequency (RF) interface 209, network connection interface 211, memory 215 including random access memory (RAM) 217, read-only memory (ROM) 219, and storage medium 221 or the like, communication subsystem 231, power source 213, and/or any other component, or any combination thereof. Storage medium 221 includes operating system 223, application program 225, and data 227. In other embodiments, storage medium 221 may include other similar types of information. Certain UEs may use all the components shown in FIGURE 10, or only a subset of the components. The level of integration between the components may vary from one UE to another UE. Further, certain UEs may contain multiple instances of a component, such as multiple processors, memories, transceivers, transmitters, receivers, etc.

In FIGURE 10, processing circuitry 201 may be configured to process computer instructions and data. Processing circuitry 201 may be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry 201 may include two central processing units (CPUs). Data may be information in a form suitable for use by a computer.

In the depicted embodiment, input/output interface 205 may be configured to provide a communication interface to an input device, output device, or input and output device. UE 200 may be configured to use an output device via input/output interface 205.

An output device may use the same type of interface port as an input device. For example, a USB port may be used to provide input to and output from UE 200. The output device may be a speaker, a sound card, a video card, a display, a monitor, a printer, an actuator, an emitter, a smartcard, another output device, or any combination thereof.

UE 200 may be configured to use an input device via input/output interface 205 to allow a user to capture information into UE 200. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In FIGURE 10, RF interface 209 may be configured to provide a communication interface to RF components such as a transmitter, a receiver, and an antenna. Network connection interface 211 may be configured to provide a communication interface to network 243a. Network 243a may encompass wired and/or wireless networks such as a local-area network (LAN), a wide-area network (WAN), a computer network, a wireless network, a telecommunications network, another like network or any combination thereof. For example, network 243a may comprise a Wi-Fi network. Network connection interface 211 may be configured to include a receiver and a transmitter interface used to communicate with one or more other devices over a communication network according to one or more communication protocols, such as Ethernet, TCP/IP, SONET, ATM, or the like. Network connection interface 211 may implement receiver and transmitter functionality appropriate to the communication network links (e.g., optical, electrical, and the like). The transmitter and receiver functions may share circuit components, software or firmware, or alternatively may be implemented separately.

RAM 217 may be configured to interface via bus 202 to processing circuitry 201 to provide storage or caching of data or computer instructions during the execution of software programs such as the operating system, application programs, and device drivers. ROM 219 may be configured to provide computer instructions or data to processing circuitry 201. For example, ROM 219 may be configured to store invariant low-level system code or data for basic system functions such as basic input and output (I/O), startup, or reception of keystrokes from a keyboard that are stored in a non-volatile memory.

Storage medium 221 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium 221 may be configured to include operating system 223, application program 225 such as a web browser application, a widget or gadget engine or another application, and data file 227. Storage medium 221 may store, for use by UE 200, any of a variety of various operating systems or combinations of operating systems.

Storage medium 221 may be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 221 may allow UE 200 to access computer-executable instructions, application programs or the like, stored on transitory or non-transitory memory media, to off-load data, or to upload data. An article of manufacture, such as one utilizing a communication system may be tangibly embodied in storage medium 221, which may comprise a device readable medium.

In FIGURE 10, processing circuitry 201 may be configured to communicate with network 243b using communication subsystem 231. Network 243a and network 243b may be the same network or networks or different network or networks. Communication subsystem 231 may be configured to include one or more transceivers used to communicate with network 243b. For example, communication subsystem 231 may be configured to include one or more transceivers used to communicate with one or more remote transceivers of another device capable of wireless communication such as another WD, UE, or base station of a radio access network (RAN) according to one or more communication protocols, such as IEEE 802.2, CDMA, WCDMA, GSM, LTE, UTRAN, WiMax, or the like. Each transceiver may include transmitter 233 and/or receiver 235 to implement transmitter or receiver functionality, respectively, appropriate to the RAN links (e.g., frequency allocations and the like). Further, transmitter 233 and receiver 235 of each transceiver may share circuit components, software or firmware, or alternatively may be implemented separately.

In the illustrated embodiment, the communication functions of communication subsystem 231 may include data communication, voice communication, multimedia communication, short-range communications such as Bluetooth, near-field communication, location-based communication such as the use of the global positioning system (GPS) to determine a location, another like communication function, or any combination thereof. For example, communication subsystem 231 may include cellular communication, Wi-Fi communication, Bluetooth communication, and GPS communication. Network 243b may encompass wired and/or wireless networks such as a local-area network (LAN), a wide-area network (WAN), a computer network, a wireless network, a telecommunications network, another like network or any combination thereof. For example, network 243b may be a cellular network, a Wi-Fi network, and/or a near-field network. Power source 213 may be configured to provide alternating current (AC) or direct current (DC) power to components of UE 200.

The features, benefits and/or functions described herein may be implemented in one of the components of UE 200 or partitioned across multiple components of UE 200. Further, the features, benefits, and/or functions described herein may be implemented in any combination of hardware, software or firmware. In one example, communication subsystem 231 may be configured to include any of the components described herein. Further, processing circuitry 201 may be configured to communicate with any of such components over bus 202. In another example, any of such components may be represented by program instructions stored in memory that when executed by processing circuitry 201 perform the corresponding functions described herein. In another example, the functionality of any of such components may be partitioned between processing circuitry 201 and communication subsystem 231. In another example, the non-computationally intensive functions of any of such components may be implemented in software or firmware and the computationally intensive functions may be implemented in hardware.

FIGURE 11 is a flowchart illustrating an example method in wireless device, according to certain embodiments. In particular embodiments, one or more steps of FIGURE 11 may be performed by wireless device 110 described with respect to FIGURE 9. The wireless device is capable of operating in both a first network and a second network (e.g., multi-SIM wireless device) wherein the wireless device is in an idle/inactive state in the second network.

The method may begin at step 1112, where the wireless device (e.g., wireless device 110) determines a periodic pattern for performing a set of idle/inactive mode procedures in the second network. In particular embodiments, the periodic pattern is based on one or more of the following procedures in the second network: paging frames and paging occasions configured for the wireless device, discontinuous reception (DRX) cycle, periods for performing measurements, and periodic registration area updates.

In particular embodiments, the periodic pattern comprises a set of time domain windows. The time domain windows may be relative to a frame structure of the first network. An advantage is that the first network does not need to understand a frame structure of the second network.

At step 1114, the wireless device transmits a first indication of the determined periodic pattern to the first network. The first network uses the determined periodic pattern to determine when not to schedule the wireless device in the first network so that the wireless device may perform idle/inactive procedures in the second network.

At step 1116, the wireless device monitors an occurrence of at least one idle/inactive event in the second network. For example, an event in the second network may trigger a new series of periodic events or an aperiodic event. Depending on the type of event, the wireless device may need to update the determined periodic pattern to accommodate another series of periodic events or may send a request to the first network to leave the network for some time to perform an aperiodic task in the second network.

At step 1118, the wireless device transmits a second indication of the occurrence of the at least one idle/inactive event to the first network. In particular embodiments, the occurrence of the at least one idle/inactive event in the second network comprises a periodic event and the second indication comprises an updated periodic pattern based on the determined periodic pattern and the occurrence of the at least one idle/inactive event.

In particular embodiments, the occurrence of the at least one idle/inactive event in the second network comprises a non-periodic event and the second indication comprises an indication that the wireless device will be unavailable to the first network.

In particular embodiments, the occurrence of the at least one idle/inactive event in the second network comprises a non-periodic event and the second indication comprises a request to the first network for the wireless device to be unavailable to the first network. The second indication may include an indication of an amount of time the wireless device will be unavailable to the first network. The second indication may include an indication of the idle/inactive event that occurred in the second network.

Modifications, additions, or omissions may be made to method 1100 of FIGURE 11. Additionally, one or more steps in the method of FIGURE 11 may be performed in parallel or in any suitable order.

FIGURE 12 is a flowchart illustrating an example method in a network node, according to certain embodiments. In particular embodiments, one or more steps of FIGURE 12 may be performed by network node 160 described with respect to FIGURE 9. The network node is operating in a first network serving a first wireless device (e.g., multi-SIM wireless device) wherein the wireless device is also in an idle/inactive state in a second network.

The method may begin at step 1212, where the network node (e.g., network node 160) receives, from a wireless device a first indication of a periodic pattern for performing a set of idle/inactive mode procedures in the second network.

The periodic pattern and idle/inactive mode procedures are described with respect to FIGURE 11.

At step 1214, upon an occurrence of at least one idle/inactive event in the second network, the network node receives a second indication of the occurrence of the at least one idle/inactive event. The second indication is described with respect to FIGURE 11.

Modifications, additions, or omissions may be made to method 1200 of FIGURE 12. Additionally, one or more steps in the method of FIGURE 12 may be performed in parallel or in any suitable order.

FIGURE 13 illustrates a schematic block diagram of two apparatuses in a wireless network (for example, the wireless network illustrated in FIGURE 9). The apparatuses may comprise a network node and a wireless device (e.g., wireless device 110 and network node 160 in FIGURE 9). Apparatuses 1600 and 1700 are operable to carry out the example methods described with reference to FIGURES 11 and 12, respectively. Apparatuses 1600 and 1700 may be operable to carry out other processes or methods disclosed herein. It is also to be understood that the methods of FIGURES 11 and 12 are not necessarily carried out solely by apparatuses 1600 and 1700. At least some operations of the method can be performed by one or more other entities.

Virtual apparatus 1600 may comprise processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory includes program instructions for executing one or more telecommunications and/or data communications protocols as well as instructions for carrying out one or more of the techniques described herein, in several embodiments.

In some implementations, the processing circuitry may be used to cause receiving module 1602, determining module 1604, transmitting module 1606, and any other suitable units of apparatus 1600 to perform corresponding functions according one or more embodiments of the present disclosure.

As illustrated in FIGURE 13, apparatus 1600 includes receiving module 1602 configured to receive control and data transmission from a first network and a second network, according to any of the embodiments and examples described herein. Determining module 1604 is configured to determine a periodic pattern for performing a set of idle/inactive mode procedures and monitoring events, according to any of the embodiments and examples described herein. Transmitting module 1606 transmits indications of period patterns and other requests to a network node, according to any of the embodiments and examples described herein.

In some implementations, the processing circuitry may be used to cause receiving module 1702, determining module 1704, transmitting module 1706, and any other suitable units of apparatus 1700 to perform corresponding functions according one or more embodiments of the present disclosure.

As illustrated in FIGURE 13, apparatus 1700 includes receiving module 1702 configured to receive indications of periodic patterns and other requests, according to any of the embodiments and examples described herein. Determining module 1704 is configured to determine when to schedule a wireless device, according to any of the embodiments and examples described herein. Transmitting module 1706 is configured to transmit control and data to a wireless device, according to any of the embodiments and examples described herein.

FIGURE 14 is a schematic block diagram illustrating a virtualization environment 300 in which functions implemented by some embodiments may be virtualized. In the present context, virtualizing means creating virtual versions of apparatuses or devices which may include virtualizing hardware platforms, storage devices and networking resources. As used herein, virtualization can be applied to a node (e.g., a virtualized base station or a virtualized radio access node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein may be implemented as virtual components executed by one or more virtual machines implemented in one or more virtual environments 300 hosted by one or more of hardware nodes 330. Further, in embodiments in which the virtual node is not a radio access node or does not require radio connectivity (e.g., a core network node), then the network node may be entirely virtualized.

The functions may be implemented by one or more applications 320 (which may alternatively be called software instances, virtual appliances, network functions, virtual nodes, virtual network functions, etc.) operative to implement some of the features, functions, and/or benefits of some of the embodiments disclosed herein. Applications 320 are run in virtualization environment 300 which provides hardware 330 comprising processing circuitry 360 and memory 390. Memory 390 contains instructions 395 executable by processing circuitry 360 whereby application 320 is operative to provide one or more of the features, benefits, and/or functions disclosed herein.

Virtualization environment 300, comprises general-purpose or special-purpose network hardware devices 330 comprising a set of one or more processors or processing circuitry 360, which may be commercial off-the-shelf (COTS) processors, dedicated Application Specific Integrated Circuits (ASICs), or any other type of processing circuitry including digital or analog hardware components or special purpose processors. Each hardware device may comprise memory 390-1 which may be non-persistent memory for temporarily storing instructions 395 or software executed by processing circuitry 360. Each hardware device may comprise one or more network interface controllers (NICs) 370, also known as network interface cards, which include physical network interface 380. Each hardware device may also include non-transitory, persistent, machine-readable storage media 390-2 having stored therein software 395 and/or instructions executable by processing circuitry 360. Software 395 may include any type of software including software for instantiating one or more virtualization layers 350 (also referred to as hypervisors), software to execute virtual machines 340 as well as software allowing it to execute functions, features and/or benefits described in relation with some embodiments described herein.

Virtual machines 340, comprise virtual processing, virtual memory, virtual networking or interface and virtual storage, and may be run by a corresponding virtualization layer 350 or hypervisor. Different embodiments of the instance of virtual appliance 320 may be implemented on one or more of virtual machines 340, and the implementations may be made in different ways.

During operation, processing circuitry 360 executes software 395 to instantiate the hypervisor or virtualization layer 350, which may sometimes be referred to as a virtual machine monitor (VMM). Virtualization layer 350 may present a virtual operating platform that appears like networking hardware to virtual machine 340.

As shown in FIGURE 14, hardware 330 may be a standalone network node with generic or specific components. Hardware 330 may comprise antenna 3225 and may implement some functions via virtualization. Alternatively, hardware 330 may be part of a larger cluster of hardware (e.g. such as in a data center or customer premise equipment (CPE)) where many hardware nodes work together and are managed via management and orchestration (MANO) 3100, which, among others, oversees lifecycle management of applications 320.

Virtualization of the hardware is in some contexts referred to as network function virtualization (NFV). NFV may be used to consolidate many network equipment types onto industry standard high-volume server hardware, physical switches, and physical storage, which can be located in data centers, and customer premise equipment.

In the context of NFV, virtual machine 340 may be a software implementation of a physical machine that runs programs as if they were executing on a physical, non-virtualized machine. Each of virtual machines 340, and that part of hardware 330 that executes that virtual machine, be it hardware dedicated to that virtual machine and/or hardware shared by that virtual machine with others of the virtual machines 340, forms a separate virtual network elements (VNE).

Still in the context of NFV, Virtual Network Function (VNF) is responsible for handling specific network functions that run in one or more virtual machines 340 on top of hardware networking infrastructure 330 and corresponds to application 320 in FIGURE 14.

In some embodiments, one or more radio units 3200 that each include one or more transmitters 3220 and one or more receivers 3210 may be coupled to one or more antennas 3225. Radio units 3200 may communicate directly with hardware nodes 330 via one or more appropriate network interfaces and may be used in combination with the virtual components to provide a virtual node with radio capabilities, such as a radio access node or a base station.

In some embodiments, some signaling can be effected with the use of control system 3230 which may alternatively be used for communication between the hardware nodes 330 and radio units 3200.

With reference to FIGURE 15, in accordance with an embodiment, a communication system includes telecommunication network 410, such as a 3GPP-type cellular network, which comprises access network 411, such as a radio access network, and core network 414. Access network 411 comprises a plurality of base stations 412a, 412b, 412c, such as NBs, eNBs, gNBs or other types of wireless access points, each defining a corresponding coverage area 413a, 413b, 413c. Each base station 412a, 412b, 412c is connectable to core network 414 over a wired or wireless connection 415. A first UE 491 located in coverage area 413c is configured to wirelessly connect to, or be paged by, the corresponding base station 412c. A second UE 492 in coverage area 413a is wirelessly connectable to the corresponding base station 412a. While a plurality of UEs 491, 492 are illustrated in this example, the disclosed embodiments are equally applicable to a situation where a sole UE is in the coverage area or where a sole UE is connecting to the corresponding base station 412.

Telecommunication network 410 is itself connected to host computer 430, which may be embodied in the hardware and/or software of a standalone server, a cloud-implemented server, a distributed server or as processing resources in a server farm. Host computer 430 may be under the ownership or control of a service provider or may be operated by the service provider or on behalf of the service provider. Connections 421 and 422 between telecommunication network 410 and host computer 430 may extend directly from core network 414 to host computer 430 or may go via an optional intermediate network 420. Intermediate network 420 may be one of, or a combination of more than one of, a public, private or hosted network; intermediate network 420, if any, may be a backbone network or the Internet; in particular, intermediate network 420 may comprise two or more sub-networks (not shown).

The communication system of FIGURE 15 as a whole enables connectivity between the connected UEs 491, 492 and host computer 430. The connectivity may be described as an over-the-top (OTT) connection 450. Host computer 430 and the connected UEs 491, 492 are configured to communicate data and/or signaling via OTT connection 450, using access network 411, core network 414, any intermediate network 420 and possible further infrastructure (not shown) as intermediaries. OTT connection 450 may be transparent in the sense that the participating communication devices through which OTT connection 450 passes are unaware of routing of uplink and downlink communications. For example, base station 412 may not or need not be informed about the past routing of an incoming downlink communication with data originating from host computer 430 to be forwarded (e.g., handed over) to a connected UE 491. Similarly, base station 412 need not be aware of the future routing of an outgoing uplink communication originating from the UE 491 towards the host computer 430.

FIGURE 16 illustrates an example host computer communicating via a base station with a user equipment over a partially wireless connection, according to certain embodiments. Example implementations, in accordance with an embodiment of the UE, base station and host computer discussed in the preceding paragraphs will now be described with reference to FIGURE 16. In communication system 500, host computer 510 comprises hardware 515 including communication interface 516 configured to set up and maintain a wired or wireless connection with an interface of a different communication device of communication system 500. Host computer 510 further comprises processing circuitry 518, which may have storage and/or processing capabilities. In particular, processing circuitry 518 may comprise one or more programmable processors, application-specific integrated circuits, field programmable gate arrays or combinations of these (not shown) adapted to execute instructions. Host computer 510 further comprises software 511, which is stored in or accessible by host computer 510 and executable by processing circuitry 518. Software 511 includes host application 512. Host application 512 may be operable to provide a service to a remote user, such as UE 530 connecting via OTT connection 550 terminating at UE 530 and host computer 510. In providing the service to the remote user, host application 512 may provide user data which is transmitted using OTT connection 550.

Communication system 500 further includes base station 520 provided in a telecommunication system and comprising hardware 525 enabling it to communicate with host computer 510 and with UE 530. Hardware 525 may include communication interface 526 for setting up and maintaining a wired or wireless connection with an interface of a different communication device of communication system 500, as well as radio interface 527 for setting up and maintaining at least wireless connection 570 with UE 530 located in a coverage area (not shown in FIGURE 16) served by base station 520. Communication interface 526 may be configured to facilitate connection 560 to host computer 510. Connection 560 may be direct, or it may pass through a core network (not shown in FIGURE 16) of the telecommunication system and/or through one or more intermediate networks outside the telecommunication system. In the embodiment shown, hardware 525 of base station 520 further includes processing circuitry 528, which may comprise one or more programmable processors, application-specific integrated circuits, field programmable gate arrays or combinations of these (not shown) adapted to execute instructions. Base station 520 further has software 521 stored internally or accessible via an external connection.

Communication system 500 further includes UE 530 already referred to. Its hardware 535 may include radio interface 537 configured to set up and maintain wireless connection 570 with a base station serving a coverage area in which UE 530 is currently located. Hardware 535 of UE 530 further includes processing circuitry 538, which may comprise one or more programmable processors, application-specific integrated circuits, field programmable gate arrays or combinations of these (not shown) adapted to execute instructions. UE 530 further comprises software 531, which is stored in or accessible by UE 530 and executable by processing circuitry 538. Software 531 includes client application 532. Client application 532 may be operable to provide a service to a human or non-human user via UE 530, with the support of host computer 510. In host computer 510, an executing host application 512 may communicate with the executing client application 532 via OTT connection 550 terminating at UE 530 and host computer 510. In providing the service to the user, client application 532 may receive request data from host application 512 and provide user data in response to the request data. OTT connection 550 may transfer both the request data and the user data. Client application 532 may interact with the user to generate the user data that it provides.

It is noted that host computer 510, base station 520 and UE 530 illustrated in FIGURE 16 may be similar or identical to host computer 430, one of base stations 412a, 412b, 412c and one of UEs 491, 492 of FIGURE 15, respectively. This is to say, the inner workings of these entities may be as shown in FIGURE 16 and independently, the surrounding network topology may be that of FIGURE 15.

In FIGURE 16, OTT connection 550 has been drawn abstractly to illustrate the communication between host computer 510 and UE 530 via base station 520, without explicit reference to any intermediary devices and the precise routing of messages via these devices. Network infrastructure may determine the routing, which it may be configured to hide from UE 530 or from the service provider operating host computer 510, or both. While OTT connection 550 is active, the network infrastructure may further take decisions by which it dynamically changes the routing (e.g., based on load balancing consideration or reconfiguration of the network).

Wireless connection 570 between UE 530 and base station 520 is in accordance with the teachings of the embodiments described throughout this disclosure. One or more of the various embodiments improve the performance of OTT services provided to UE 530 using OTT connection 550, in which wireless connection 570 forms the last segment. More precisely, the teachings of these embodiments may improve the signaling overhead and reduce latency, which may provide faster internet access for users.

A measurement procedure may be provided for monitoring data rate, latency and other factors on which the one or more embodiments improve. There may further be an optional network functionality for reconfiguring OTT connection 550 between host computer 510 and UE 530, in response to variations in the measurement results. The measurement procedure and/or the network functionality for reconfiguring OTT connection 550 may be implemented in software 511 and hardware 515 of host computer 510 or in software 531 and hardware 535 of UE 530, or both. In embodiments, sensors (not shown) may be deployed in or in association with communication devices through which OTT connection 550 passes; the sensors may participate in the measurement procedure by supplying values of the monitored quantities exemplified above or supplying values of other physical quantities from which software 511, 531 may compute or estimate the monitored quantities. The reconfiguring of OTT connection 550 may include message format, retransmission settings, preferred routing etc.; the reconfiguring need not affect base station 520, and it may be unknown or imperceptible to base station 520. Such procedures and functionalities may be known and practiced in the art. In certain embodiments, measurements may involve proprietary UE signaling facilitating host computer 510's measurements of throughput, propagation times, latency and the like. The measurements may be implemented in that software 511 and 531 causes messages to be transmitted, in particular empty or 'dummy' messages, using OTT connection 550 while it monitors propagation times, errors etc.

FIGURE 17 is a flowchart illustrating a method implemented in a communication system, in accordance with one embodiment. The communication system includes a host computer, a base station and a UE which may be those described with reference to FIGURES 15 and 16. For simplicity of the present disclosure, only drawing references to FIGURE 17 will be included in this section.

In step 610, the host computer provides user data. In substep 611 (which may be optional) of step 610, the host computer provides the user data by executing a host application. In step 620, the host computer initiates a transmission carrying the user data to the UE. In step 630 (which may be optional), the base station transmits to the UE the user data which was carried in the transmission that the host computer initiated, in accordance with the teachings of the embodiments described throughout this disclosure. In step 640 (which may also be optional), the UE executes a client application associated with the host application executed by the host computer.

FIGURE 18 is a flowchart illustrating a method implemented in a communication system, in accordance with one embodiment. The communication system includes a host computer, a base station and a UE which may be those described with reference to FIGURES 15 and 16. For simplicity of the present disclosure, only drawing references to FIGURE 18 will be included in this section.

In step 710 of the method, the host computer provides user data. In an optional substep (not shown) the host computer provides the user data by executing a host application. In step 720, the host computer initiates a transmission carrying the user data to the UE. The transmission may pass via the base station, in accordance with the teachings of the embodiments described throughout this disclosure. In step 730 (which may be optional), the UE receives the user data carried in the transmission.

FIGURE 19 is a flowchart illustrating a method implemented in a communication system, in accordance with one embodiment. The communication system includes a host computer, a base station and a UE which may be those described with reference to FIGURES 15 and 16. For simplicity of the present disclosure, only drawing references to FIGURE 19 will be included in this section.

In step 810 (which may be optional), the UE receives input data provided by the host computer. Additionally, or alternatively, in step 820, the UE provides user data. In substep 821 (which may be optional) of step 820, the UE provides the user data by executing a client application. In substep 811 (which may be optional) of step 810, the UE executes a client application which provides the user data in reaction to the received input data provided by the host computer. In providing the user data, the executed client application may further consider user input received from the user. Regardless of the specific manner in which the user data was provided, the UE initiates, in substep 830 (which may be optional), transmission of the user data to the host computer. In step 840 of the method, the host computer receives the user data transmitted from the UE, in accordance with the teachings of the embodiments described throughout this disclosure.

FIGURE 20 is a flowchart illustrating a method implemented in a communication system, in accordance with one embodiment. The communication system includes a host computer, a base station and a UE which may be those described with reference to FIGURES 15 and 16. For simplicity of the present disclosure, only drawing references to FIGURE 20 will be included in this section.

In step 910 (which may be optional), in accordance with the teachings of the embodiments described throughout this disclosure, the base station receives user data from the UE. In step 920 (which may be optional), the base station initiates transmission of the received user data to the host computer. In step 930 (which may be optional), the host computer receives the user data carried in the transmission initiated by the base station.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

Modifications, additions, or omissions may be made to the systems and apparatuses disclosed herein without departing from the scope of the invention. The components of the systems and apparatuses may be integrated or separated. Moreover, the operations of the systems and apparatuses may be performed by more, fewer, or other components. Additionally, operations of the systems and apparatuses may be performed using any suitable logic comprising software, hardware, and/or other logic. As used in this document, "each" refers to each member of a set or each member of a subset of a set.

Modifications, additions, or omissions may be made to the methods disclosed herein without departing from the scope of the invention. The methods may include more, fewer, or other steps. Additionally, steps may be performed in any suitable order.

The foregoing description sets forth numerous specific details. It is understood, however, that embodiments may be practiced without these specific details. In other instances, well-known circuits, structures and techniques have not been shown in detail in order not to obscure the understanding of this description. Those of ordinary skill in the art, with the included descriptions, will be able to implement appropriate functionality without undue experimentation.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to implement such feature, structure, or characteristic in connection with other embodiments, whether or not explicitly described.

Although this disclosure has been described in terms of certain embodiments, alterations and permutations of the embodiments will be apparent to those skilled in the art. Accordingly, the above description of the embodiments does not constrain this disclosure. Other changes, substitutions, and alterations are possible without departing from the scope of this disclosure, as defined by the claims below.

At least some of the following abbreviations may be used in this disclosure. If there is an inconsistency between abbreviations, preference should be given to how it is used above. If listed multiple times below, the first listing should be preferred over any subsequent listing(s).

| | |
|---|---|
| 1x RTT | CDMA2000 1x Radio Transmission Technology |
| 3GPP | 3rd Generation Partnership Project |
| 5G | 5th Generation |
| 5GS | 5G System |
| ABS | Almost Blank Subframe |
| ARQ | Automatic Repeat Request |
| AWGN | Additive White Gaussian Noise |
| BCCH | Broadcast Control Channel |
| BCH | Broadcast Channel |
| BW | Bandwidth |
| CA | Carrier Aggregation |
| CC | Carrier Component |
| CCA | Clear Channel Access |
| CCCH SDU | Common Control Channel SDU |
| CDMA | Code Division Multiplexing Access |
| CE | Control Element |
| CGI | Cell Global Identifier |
| CIR | Channel Impulse Response |
| CNC | Central Network Controller (for TSN) |
| COT | Channel Occupancy Time |
| CP | Cyclic Prefix |
| CPICH | Common Pilot Channel |
| CPICH Ec/No | CPICH Received energy per chip divided by the power density in the band |
| CQI | Channel Quality information |
| C-RNTI | Cell RNTI |
| CSI | Channel State Information |
| D2D | Device-To-Device |
| DCCH | Dedicated Control Channel |
| DL | Downlink |

| | |
|---|---|
| DM | Demodulation |
| DMRS | Demodulation Reference Signal |
| DRX | Discontinuous Reception |
| DS-TT | Device Side TSN Translator |
| DTX | Discontinuous Transmission |
| DTCH | Dedicated Traffic Channel |
| DUT | Device Under Test |
| E-CID | Enhanced Cell-ID (positioning method) |
| E-SMLC | Evolved-Serving Mobile Location Centre |
| ECGI | Evolved CGI |
| eNB | E-UTRAN NodeB |
| ePDCCH | enhanced Physical Downlink Control Channel |
| E-SMLC | evolved Serving Mobile Location Center |
| E-UTRA | Evolved UTRA |
| E-UTRAN | Evolved UTRAN |
| FBE | Frame Based Equipment |
| FDD | Frequency Division Duplex |
| FFP | Fixed Frame Period |
| GERAN | GSM EDGE Radio Access Network |
| GM | Grand Master |
| gNB | Base station in NR |
| GNSS | Global Navigation Satellite System |
| GSM | Global System for Mobile communication |
| HARQ | Hybrid Automatic Repeat Request |
| HO | Handover |
| HSPA | High Speed Packet Access |
| HRPD | High Rate Packet Data |
| IIoT | Industrial Internet-of-Things |
| LBE | Load Based Equipment |
| LBT | Listen-Before-Talk |
| LOS | Line of Sight |
| LPP | LTE Positioning Protocol |
| LTE | Long-Term Evolution |
| MAC | Medium Access Control |
| MBMS | Multimedia Broadcast Multicast Services |
| MBSFN | Multimedia Broadcast multicast service Single Frequency Network |
| MBSFN ABS | MBSFN Almost Blank Subframe |
| MDT | Minimization of Drive Tests |
| MIB | Master Information Block |
| MME | Mobility Management Entity |
| MSC | Mobile Switching Center |
| NPDCCH | Narrowband Physical Downlink Control Channel |
| NR | New Radio |
| NW-TT | Network-side TSN Translator |
| OCNG | OFDMA Channel Noise Generator |
| OFDM | Orthogonal Frequency Division Multiplexing |
| OFDMA | Orthogonal Frequency Division Multiple Access |
| OSS | Operations Support System |
| OTA | Over the Air |
| OTDOA | Observed Time Difference of Arrival |
| O&M | Operation and Maintenance |
| PBCH | Physical Broadcast Channel |
| P-CCPCH | Primary Common Control Physical Channel |
| PCell | Primary Cell |
| PCFICH | Physical Control Format Indicator Channel |
| PDCCH | Physical Downlink Control Channel |
| PD | Propagation Delay |
| PDP | Profile Delay Profile |

| | |
|---|---|
| PDSCH | Physical Downlink Shared Channel |
| PGW | Packet Gateway |
| PHICH | Physical Hybrid-ARQ Indicator Channel |
| PLMN | Public Land Mobile Network |
| PMI | Precoder Matrix Indicator |
| ppb | parts per billion |
| PRACH | Physical Random Access Channel |
| PRS | Positioning Reference Signal |
| PSS | Primary Synchronization Signal |
| PTP | Precision Time Protocol |
| PUCCH | Physical Uplink Control Channel |
| PUSCH | Physical Uplink Shared Channel |
| RACH | Random Access Channel |
| QAM | Quadrature Amplitude Modulation |
| RAN | Radio Access Network |
| RAT | Radio Access Technology |
| RAR | Random Access Response |
| RLM | Radio Link Management |
| RNC | Radio Network Controller |
| RNTI | Radio Network Temporary Identifier |
| RRC | Radio Resource Control |
| RRM | Radio Resource Management |
| RS | Reference Signal |
| RSCP | Received Signal Code Power |
| RSRP | Reference Symbol Received Power OR Reference Signal Received Power |
| RSRQ | Reference Signal Received Quality OR Reference Symbol Received Quality |
| RSSI | Received Signal Strength Indicator |
| RSTD | Reference Signal Time Difference |
| RTT | Round Trip Time |
| SCH | Synchronization Channel |
| SCell | Secondary Cell |
| SCS | Subcarrier Spacing |
| SDU | Service Data Unit |
| SFN | System Frame Number |
| SGW | Serving Gateway |
| SI | System Information |
| SIB | System Information Block |
| SNR | Signal to Noise Ratio |
| SON | Self Optimized Network |
| SS | Synchronization Signal |
| SSS | Secondary Synchronization Signal |
| TA | Timing Advance |
| TDD | Time Division Duplex |
| TDOA | Time Difference of Arrival |
| TOA | Time of Arrival |
| TS | Time Synchronization |
| TSN | Time Sensitive Networking |
| TSS | Tertiary Synchronization Signal |
| TTI | Transmission Time Interval |
| UE | User Equipment |
| UL | Uplink |
| UMTS | Universal Mobile Telecommunication System |
| UPF | User Plane Function |
| URLLC | Ultra-Reliable Low-Latency Communications |
| USIM | Universal Subscriber Identity Module |
| UTDOA | Uplink Time Difference of Arrival |
| UTRA | Universal Terrestrial Radio Access |
| UTRAN | Universal Terrestrial Radio Access Network |

WCDMA          Wide CDMA
WLAN           Wide Local Area Network

**Claims**

1. A method performed by a wireless device for multi-SIM operation, wherein the wireless device is in an idle/inactive state in the second network, the method comprising:

   determining (1112) a periodic pattern for performing a set of idle/inactive mode procedures in the second network;
   transmitting (1114) a first indication of the determined periodic pattern to the first network;
   monitoring (1116) an occurrence of at least one idle/inactive event in the second network; and
   transmitting (1118) a second indication of the occurrence of the at least one idle/inactive event to the first network.

2. The method of claim 1, wherein the occurrence of the at least one idle/inactive event in the second network comprises a periodic event and the second indication comprises an updated periodic pattern based on the determined periodic pattern and the occurrence of the at least one idle/inactive event.

3. The method of claim 1, wherein the occurrence of the at least one idle/inactive event in the second network comprises a non-periodic event and the second indication comprises an indication that the wireless device will be unavailable to the first network.

4. The method of claim 1, wherein the occurrence of the at least one idle/inactive event in the second network comprises a non-periodic event and the second indication comprises a request to the first network for the wireless device to be unavailable to the first network.

5. The method of any one of claims 3-4, wherein the second indication includes an indication of an amount of time the wireless device will be unavailable to the first network.

6. The method of any one of claims 1-5, wherein the second indication includes an indication of the idle/inactive event that occurred in the second network.

7. The method of any one of claims 1-6, wherein the periodic pattern is based on one or more of the following procedures in the second network: paging frames and paging occasions configured for the wireless device, discontinuous reception (DRX) cycle, periods for performing measurements, and periodic registration area updates.

8. The method of any one of claims 1-7, wherein the periodic pattern comprises a set of time domain windows.

9. The method of claim 8, wherein the time domain windows are relative to a frame structure of the first network.

10. The method of any one of claims 1-9, wherein the wireless device comprises a multi-SIM wireless device.

11. A wireless device (110) for multi-SIM operation, wherein the wireless device is in an idle/inactive state in the second network, the wireless device comprising processing circuitry (120) operable to:

    determine a periodic pattern for performing a set of idle/inactive mode procedures in the second network;
    transmit a first indication of the determined periodic pattern to the first network;
    monitor an occurrence of at least one idle/inactive event in the second network; and
    transmit a second indication of the occurrence of the at least one idle/inactive event to the first network.

12. A method performed by a network node in a first network serving a first wireless device for multi-SIM operation, wherein the wireless device is also in an idle/inactive state in a second network, the method comprising:

    receiving (1212), from the wireless device a first indication of a periodic pattern for performing a set of idle/inactive mode procedures in the second network; and
    upon an occurrence of at least one idle/inactive event in the second network, receiving (1214) a second indication of the occurrence of the at least one idle/inactive event.

**13.** A network node (160) capable of operating in a first network serving a first wireless device for multi-SIM operation, wherein the wireless device is also in an idle/inactive state in a second network, the network node comprising processing circuitry (170) operable to:

receive, from the wireless device a first indication of a periodic pattern for performing a set of idle/inactive mode procedures in the second network; and
upon an occurrence of at least one idle/inactive event in the second network, receive a second indication of the occurrence of the at least one idle/inactive event.

Fig. 1

Fig. 2

UE shall monitor PDCCH

On Duration

Opportunity for DRX

DRX Cycle

Fig. 3

Fig. 4

Fig. 5

Fig. 6

EP 4 412 388 A2

Fig. 7

Fig. 8

Fig. 9

110b

160b

106

110c

162

EP 4 412 388 A2

46

110

111

114

112

118    116

122    126

124    120

130    132

137

134

136

160

187

192    194

198

196    190

172

174    170

180

184

186

Fig. 10

243a Network

243b Network

200

201 Processor

205 Input/Output Interface

209 RF Interface

211 Network Connection Interface

213 Power Source

202 Bus

215 Memory

217 RAM

219 ROM

221 Storage Medium

223 Operating System

225 Application Programs

227 Data

231 Communication Subsystem

233 Transmitter

235 Receiver

1100

| 1112 – determine a periodic pattern for performing a set of idle/inactive mode procedures in the second network |

↓

| 1114 – transmit a first indication of the determined periodic pattern to the first network |

↓

| 1116 – monitor an occurrence of at least one idle/inactive event in the second network |

↓

| 1118 – transmit a second indication of the occurrence of the at least one idle/inactive event to the first network |

Fig. 11

EP 4 412 388 A2

1200

| 1212 – receive, from a wireless device, a first indication of a periodic pattern for performing a set of idle/inactive mode procedures in the second network |
| --- |

| 1214 – upon an occurrence of at least one idle/inactive event in the second network, receive a second indication of the occurrence of the at least one idle/inactive event |
| --- |

Fig. 12

EP 4 412 388 A2

1600
Wireless Device

1602
Receiving Module

1604
Determining Module

1606
Transmitting Module

1700
Network Node

1702
Receiving Module

1704
Determining Module

1706
Transmitting Module

Fig. 13

Fig. 14

Fig. 15

EP 4 412 388 A2

EP 4 412 388 A2

**510 Host Computer**

**511 SW**

**512**
Host Application

**515 HW**

**516**
Communication Interface

**518**
Processing Circuitry

**560**

**520 Base Station**

**521 SW**

**526**
Communication Interface

**525 HW**

**527**
Radio Interface

**528**
Processing Circuitry

**530 UE**

**531 SW**

**532**
Client Application

**535 HW**

**537**
Radio Interface

**538**
Processing Circuitry

**570**

**550**

**500**

Fig. 16

| **610**<br>Host computer provides<br>user data | → | **611**<br>Host computer executes<br>client application |

| **620**<br>Host computer initiates<br>transmission carrying<br>the user data to the UE |

| **630**<br>Base station transmits<br>the user data |

| **640**<br>UE executes client<br>application |

Fig. 17

| **710**<br>Host computer provides<br>user data |

| **720**<br>Host computer initiates<br>transmission carrying<br>the user data to the UE |

| **730**<br>UE receives the user<br>data |

Fig. 18

```
┌─────────────────────┐   ┌─────────────────────┐
│        810          │   │        811          │
│ UE receives input   │──▶│ UE executes client  │
│ data provided at    │   │ application         │
│ host computer       │   │                     │
└─────────────────────┘   └─────────────────────┘
          │
          ▼
┌─────────────────────┐   ┌─────────────────────┐
│        820          │   │        821          │
│ UE provides user    │──▶│ UE executes client  │
│ data                │   │ application         │
└─────────────────────┘   └─────────────────────┘
          │
          ▼
┌─────────────────────┐
│        830          │
│ UE initiates        │
│ transmission of the │
│ user data to the    │
│ host computer       │
└─────────────────────┘
          │
          ▼
┌─────────────────────┐
│        840          │
│ Host computer       │
│ receives user data  │
│ transmitted         │
│ from the UE         │
└─────────────────────┘
```

Fig. 19

```
┌─────────────────────┐
│        910          │
│ Base station        │
│ receives user data  │
│ from UE             │
└─────────────────────┘
          │
          ▼
┌─────────────────────┐
│        920          │
│ Base station        │
│ initiates           │
│ transmission of     │
│ user data to the    │
│ host computer       │
└─────────────────────┘
          │
          ▼
┌─────────────────────┐
│        930          │
│ Host computer       │
│ receives the user   │
│ data                │
└─────────────────────┘
```

Fig. 20